(19) **Europäisches Patentamt**

**European Patent Office**

**Office européen des brevets**

(11) **EP 1 650 168 A1**

(12) **EUROPEAN PATENT APPLICATION**

(43) Date of publication:
26.04.2006 Bulletin 2006/17

(51) Int Cl.:
*C02F 1/70* (2006.01)     *B09C 1/08* (2006.01)
*B01J 23/89* (2006.01)     *B01J 35/00* (2006.01)

(21) Application number: 05251352.0

(22) Date of filing: 07.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **19.10.2004 JP 2004304842**

(71) Applicant: **TODA KOGYO CORPORATION**
**Hiroshima-shi,**
**Hiroshima-ken (JP)**

(72) Inventors:
• **Imai, Tomoyuki**
**Hiroshima-ken, Hiroshima-shi (JP)**
• **Matsui, Toshiki**
**Hiroshima-ken, Hiroshima-shi (JP)**
• **Fujii, Yasushiko**
**Otake-shi, Hiroshima-ken (JP)**

• **Okita, Tomoko**
**Hatsukaichi-shi, Hiroshima-ken (JP)**
• **Okinawa, Kenji**
**Ube-shi, Yamaguchi-ken (JP)**
• **Uegami, Masayuki**
**Ube-shi, Yamaguchi-ken (JP)**
• **Okimoto, Osamu**
**Onoda-shi, Yamaguchi-ken (JP)**
• **Kawano, Junichi**
**Onoda-shi, Yamaguchi-ken (JP)**
• **Kakuya, Koji**
**Ube-shi, Yamaguchi-ken (JP)**

(74) Representative: **Woods, Geoffrey Corlett**
**J.A. KEMP & CO.**
**Gray's Inn**
**14 South Square**
**London WC1R 5JJ (GB)**

(54) **Iron composite particles for purifying soil or ground water, purifying agent containing the iron composite particles and method for purifying soil or ground water**

(57)     Iron composite particles for purifying soil or ground water, comprise an iron component; at least one noble metal selected from ruthenium, rhodium and palladium; and carbon or aluminum; and having a noble metal content of 0.01 to 5.00% by weight and a particle diameter of 0.01 to 1.0 μm. The iron composite particles and the purifying agent are capable of decomposing aliphatic organohalogen compounds such as dichloromethane, carbon tetrachloride, 1,2-dichloroethane, 1,1-dichloroethylene, cis-1,2-dichloroethylene, 1,1,1-trichloroethane, 1,1,2-trichloroethane, trichloroethylene, tetrachloroethylene, 1,3-dichloropropene or the like, and aromatic organohalogen compounds such as dioxins, PCB (polychlorinated biphenyl) or the like, which are contained in soil, ground water or waste water, at ordinary temperature in an efficient and economical manner.

**EP 1 650 168 A1**

**Description**

BACKGROUND OF THE INVENTION:

The present invention relates to iron composite particles for purifying soil or ground water, a purifying agent containing the iron composite particles, and a method for purifying soil or ground water. More particularly, the present invention relates to iron composite particles for purifying soil or ground water, which are capable of decomposing aliphatic organohalogen compounds such as dichloromethane, carbon tetrachloride, 1,2-dichloroethane, 1,1-dichloroethylene, cis-1,2-dichloroethylene, 1,1,1-trichloroethane, 1,1,2-trichloroethane, trichloroethylene, tetrachloroethylene, 1,3-dichloropropene or the like, and aromatic organohalogen compounds such as dioxins, PCB (polychlorinated biphenyl) or the like, which are contained in soil or ground water, in an efficient and economical manner; a purifying agent containing the iron composite particles; and a method for purifying soil or ground water using the purifying agent.

Conventionally, the above aliphatic organohalogen compounds such as trichloroethylene, tetrachloroethylene or the like have been extensively used for cleaning in semiconductor-manufacturing factories and for degreasing metals to be machined.

Exhaust gases, fly ashes or main ashes discharged from incineration furnaces for combusting municipal solid waste or industrial wastes, contain aromatic organohalogen compounds such as dioxins, etc. having an extremely high toxicity to human bodies even in a trace amount. Meanwhile, the "dioxins" are a generic name of such compounds formed by replacing hydrogen atoms of dibenzo-p-dioxine, dibenzofuran, etc., with chlorine atoms. The exhaust gases or fly ashes continuously stay around the incineration furnace, so that the dioxins still remain in soil of surrounding regions. Further, it is known that in many cases, waste water discharged from these facilities may also contain high-concentration dioxins.

On the other hand, PCB has been used in many applications such as insulating oils for transformers and capacitors, plasticizers or heating medium because of high chemical and thermal stability and excellent electrical insulating property thereof. Since the PCB is very harmful, the production and use thereof has been presently prohibited. However, any effective PCB-treating method has not been established until now and, therefore, a large part of the PCB past used has still been stored without treatment or disposal.

The organohalogen compounds such as aliphatic organohalogen compounds, aromatic organohalogen compounds or the like are hardly decomposable and besides exhibit carcinogenesis as well as a strong toxicity. Therefore, soil, ground water and waste water contaminated with these organohalogen compounds has raised a significant environmental problem.

More specifically, upon discharge of the above aliphatic organohalogen compounds and aromatic organohalogen compounds, these hardly-decomposable organohalogen compounds are accumulated in soil, and the soil contaminated with the organohalogen compounds further causes contamination of ground water by the organohalogen compounds. In addition, the contaminated ground water flows out from the contaminated soil and spreads over the surrounding regions, so that the problem of pollution by the organohalogen compounds is caused over wider areas.

Thus, if the soil is once contaminated with the organohalogen compounds, land involving such soil cannot be reused and developed again. Therefore, there have been proposed various techniques or methods of purifying the soil and ground water contaminated with the organohalogen compounds. However, since the organohalogen compounds are hardly decomposable and a large amount of soil and ground water or high-concentration waste water must be purified, any efficient and economical purifying techniques or methods have not been fully established until now. In particular, since dioxins and PCB are thermally and chemically stable compounds, it has been difficult to decompose these compounds by the conventional methods conducted at ordinary temperature.

In general, as the method of purifying soil contaminated with the organohalogen compounds, there are known a purifying method of using various catalysts; a method of absorbing and removing vapors of the organohalogen compounds by utilizing a volatility thereof; a thermal decomposition method of heat-treating excavated soil to convert the soil into harmless one; a method of purifying the soil by microorganisms; or the like. In addition, as the method of purifying the ground water contaminated with the organohalogen compounds, there are known a vacuum extraction method or a pumping aeration method of extracting the contaminated ground water out of soil and converting the ground water into harmless one; a method of pumping the contaminated ground water and removing the organohalogen compounds therefrom; or the like. Further, as the method of purifying waste water contaminated with the organohalogen compounds, there have been proposed aeration treatment methods, oxidation treatment methods using ultraviolet rays, ozone, hydrogen peroxide, etc., bioremediation methods utilizing microorganisms, or the like.

Further, in recent years, there have been made studies concerning reducing decomposition treatment methods using iron particles, reducing decomposition treatment methods using iron particles and anaerobic bacteria, oxidative decomposition treatment methods using hydrogen peroxide, or the like.

For example, among these conventional techniques or methods of purifying soil or ground water contaminated with the organohalogen compounds, there have been proposed the below-mentioned methods of purifying the soil or ground water contaminated with the organohalogen compounds into harmless ones by mixing and contacting the soil or ground water with a purifying agent composed of iron-based particles.

That is, there has been proposed the method of boring a hole through contaminated soil, injecting iron particles into the drilled bore by compressed air to form an iron particle-dispersing layer containing the iron particles, and then contacting the thus formed ion particle-dispersing layer with the ground water to convert harmful substances contained in the soil or ground water into harmless ones (Japanese Patent Application Laid-Open (KOKAI) No. 10-71386(1998)). However, in this Japanese Patent Application, there are no descriptions concerning detailed properties and amount of the iron particles used, and, therefore, this method may fail to sufficiently reduce the amount of the hardly decomposable aromatic organohalogen compounds.

Also, there has been proposed the method of adding and mixing in soil, iron particles containing carbon in an amount of not less than 0.1% by weight to convert organohalogen compounds contained in the soil into harmless ones (Japanese Patent Application Laid-Open (KOKAI) No. 11-235577(1999)). However, in this method, although the specific surface area and particle size of the iron particles used are specified, since the particle size is too large, it may be difficult to sufficiently reduce the amount of the hardly-decomposable aromatic organohalogen compounds.

In addition, there has been proposed a method of mixing PCB with metal particles and then heating the obtained uniform kneaded material to form a metal chloride, thereby converting PCB into the harmless substance (Japanese Patent Application Laid-Open (KOKAI) No. 11-253908(1999)). However, this method requires a heat treatment that must be conducted at a temperature as high as not less than 250°C, resulting in uneconomical process.

Further, there has been proposed the method of converting organohalogen compounds contained in soil into harmless ones using copper-containing iron particles (Japanese Patent Application Laid-Open (KOKAI) No. 2000-5740). However, since decomposition of the organohalogen compounds requires a long period of time, this method may also fail to efficiently and economically convert the organohalogen compounds into harmless ones.

Further, there has been proposed the method of subjecting halogenated hydrocarbons to reducing dehalogenation by the chemical reaction thereof with reducing metals in the presence of a hydrogen-donating compound (Japanese Patent Application Laid-Open (KOKAI) No. 2000-225385). However, amines are inevitably required to promote the dehalogenation reaction, and the reducing metals themselves are still unsatisfactory for showing a sufficient decomposition reactivity.

Further, there has been proposed the method of contacting organohalogen compounds with iron-based metals (Japanese Patent Application Laid-Open (KOKAI) No. 2000-237768). However, the iron-based metals used in this method are fibrous iron-based metals having a large fiber diameter, and, therefore, may also fail to sufficiently reduce the hardly-decomposable aromatic organohalogen compounds.

Also, there has been proposed the method of contacting dioxins with an aqueous hydrochloric acid solution containing mill scale produced from the production process of hot-rolled steel plate in steel plant, at a temperature lower than 100°C to convert the dioxins into harmless ones (Japanese Patent Application Laid-Open (KOKAI) No. 2000-334063). However, since the use of the aqueous hydrochloric acid solution is essentially required in order to promote conversion of the organohalogen compounds into harmless ones, the decomposition reaction using the mill scale may fail to proceed sufficiently.

In addition, there is described a soil-purifying agent composed of a water suspension containing iron particles having an average particle diameter of 1 to 500 $\mu$m (Japanese Patent Application Laid-Open (KOKAI) No. 2001-38341). However, since the iron particles used have a too large particle size, it may be difficult to fully decompose the hardly-decomposable aromatic organohalogen compounds.

Further, there has been proposed the method of contacting soil contaminated with dioxins with an aqueous hydrochloric acid-acidified solution containing an iron compound to convert the dioxins into harmless ones (Japanese Patent Application Laid-Open (KOKAI) No. 2001-113261). However, since the use of the aqueous hydrochloric acid solution is essentially required in order to promote the conversion of dioxins into harmless ones, the decomposition reaction using the iron compound by itself may fail to proceed sufficiently.

In addition, there is described the method of subjecting waste water containing dioxins, etc., to wet oxidation treatment using a titanium-iron-platinum-based catalyst, etc., under a pressure capable of maintaining the waste water in a liquid phase in the presence of an oxidizing agent and a combustion improver (Japanese Patent Application Laid-Open (KOKAI) No. 2001-149962). However, this method requires a special apparatus capable of heating at a temperature of about 160°C, resulting in uneconomical process.

In addition, there is described the method of using a water suspension containing spherical iron particles having an average particle diameter of less than 10 $\mu$m (Japanese Patent Application Laid-Open (KOKAI) No. 2001-198567). However, since the water suspension containing the spherical iron particles is obtained by collecting dusts contained in exhaust gas discharged during refining process from an oxygen blowing converter for steel-making, and removing gases therefrom, it may be difficult to fully reduce the amount of the hardly-decomposable aromatic organohalogen compounds.

Further, there are described iron particles for decomposing organohalogen compounds, in which a part of the surface of the iron particles is adhered with a metal selected from nickel, copper, cobalt and molybdenum, and the remaining part of the surface other than the surface adhered with the above metal is covered with an iron oxide film (Japanese Patent Application Laid-Open (KOKAI) No. 2002-161263). However, the iron particles used are iron particles obtained from mill scale or iron particles obtained by atomizing molten steel with water. As is apparent from the specific surface area of the iron particles as described therein, it is considered that the iron particles have a large particle size. Thus, the iron particles may also fail to fully reduce the amount of the hardly-decomposable organohalogen compounds.

Further, there are described iron particles for decomposing organohalogen compounds on the surface of which graphite is present at a high concentration (Japanese Patent Application Laid-Open (KOKAI) No. 2002-166171). Although the iron particles are effective to decompose aliphatic organohalogen compounds such as trichloroethylene, it may be difficult to fully reduce the amount of the hardly-decomposable aromatic organohalogen compounds.

Also, there is described the method of purifying materials contaminated with chemical substances by adding thereto a metal-based catalyst such as iron particles, iron sulfate and iron chloride, and a mixed solution of an aqueous hydrogen peroxide solution and sulfuric acid, and stirring the resultant mixture (Japanese Patent Application Laid-Open (KOKAI) No. 2002-254060). Although the method is effective to decompose aliphatic organohalogen compounds such as trichloroethylene, it may be difficult to fully reduce the amount of the hardly-decomposable aromatic organohalogen compounds.

In addition, there is described the method of using sulfur-containing iron particles in purification treatment of soil or ground water contaminated with organohalogen compounds (Japanese Patent Application Laid-Open (KOKAI) No. 2002-210452). However, since the iron particles have a too large particle size, it may be difficult to fully reduce the organohalogen compounds.

Also, there is described the method of using magnetite-containing iron composite particles in purification treatment of soil or ground water contaminated with organohalogen compounds (Japanese Patent Application Laid-Open (KOKAI) No. 2002-317202). However, since the iron particles contain no sulfur, it may be difficult to fully reduce the organohalogen compounds.

Further, there is described the method of purifying soil or ground water contaminated with organohalogen compounds using a composite material of magnetite and iron (Japanese Patent Application Laid-Open (KOKAI) No. 2004-83086). However, this method may still fail to efficiently decompose the organohalogen compounds for a short period of time.

Furthermore, there is described the method of decomposing PCB contained in an aqueous solution at ordinary temperature using composite particles formed by coating the surface of iron particles having a particle size of 1 to 100 nm with Pd (Chuan-Bao Wang and Wei-Xian Zhang, "ENVIRONMENTAL SCIENCE & THCHNOLOGY", VOL. 31, NO. 7, pp. 2154-2156 (1997)). However, this method may fail to efficiently decompose PCB for a short period of time.

As a result of the present inventors' earnest studies for solving the above problems, it has been unexpectedly found that iron composite particles containing at least one noble metal selected from the group consisting of ruthenium, rhodium and palladium, and carbon or aluminum, are capable of purifying organohalogen compounds in the soil or ground water in an efficient, continuous and economical manner. The present invention has been attained on the basis of this finding.

SUMMARY OF THE INVENTION

An object of the present invention is to provide iron composite particles for purifying soil or ground water, which are capable of decomposing organohalogen compounds contained in soil, ground water or waste water at ordinary temperature in an efficient and economical manner.

Another object of the present invention is to provide a purifying agent for soil or ground water, which are capable of decomposing organohalogen compounds contained in soil, ground water or waste water at ordinary temperature in an efficient and economical manner, as well as a method for purifying soil or ground water.

To accomplish the aims, in a first aspect of the present invention, there are provided iron composite particles for purifying soil or ground water, comprising an iron component, at least one noble metal selected from the group consisting of ruthenium, rhodium and palladium, and carbon or aluminum, and having a noble metal content of 0.01 to 5.00% by weight and a particle diameter of 0.05 to 0.50 $\mu$m.

In a second aspect of the present invention, there are provided iron composite particles for purifying soil or ground water, comprising an iron component composed of $\alpha$-Fe, carbon, and at least one noble metal selected from the group consisting of ruthenium, rhodium and palladium, and having an Fe content of 85.00 to 99.89% by weight, a noble metal content of 0.01 to 5.00% by weight, a carbon content of 0.10 to 10.00% by weight and a particle diameter of 0.05 to 0.50 $\mu$m.

In a third aspect of the present invention, there are provided iron composite particles for purifying soil or ground water, comprising an iron component composed of $\alpha$-Fe and magnetite, aluminum, and at least one noble metal selected from the group consisting of ruthenium, rhodium and palladium, and having a noble metal content of 0.01 to 5.00% by weight, an Al content of 0.10 to 1.50% by weight, a ratio of a diffraction intensity $D_{110}$ of (110) plane of $\alpha$-Fe to a sum of a diffraction intensity $D_{311}$ of (311) plane of magnetite and the diffraction intensity $D_{110}$, i.e., $(D_{110}/(D_{311} + D_{110}))$ of 0.30 to 0.95 as measured from X-ray diffraction spectrum of the iron composite particles, and an average particle diameter of 0.05 to 0.50 $\mu$m.

In a fourth aspect of the present invention, there are provided iron composite particles for purifying soil or ground water, comprising $\alpha$-Fe, carbon and at least one noble metal selected from the group consisting of ruthenium, rhodium and palladium; and having an Fe content of 87.00 to 99.65% by weight, a carbon content of 0.30 to 8.00% by weight, a noble metal content of 0.05 to 3.00% by weight, a particle diameter of 0.05 to 0.30 $\mu$m, and a BET specific surface area value of 5.0 to 60 $m^2$/g.

In a fifth aspect of the present invention, there are provided iron composite particles for purifying soil or ground water, comprising $\alpha$-Fe, magnetite, aluminum and at least one noble metal selected from the group consisting of ruthenium, rhodium and palladium, said noble metal being carried on composite particles comprising the $\alpha$-Fe, magnetite and aluminum; and having a ratio of a diffraction intensity $D_{110}$ of (110) plane of $\alpha$-Fe to a sum of a diffraction intensity $D_{311}$ of (311) plane of magnetite and the diffraction intensity $D_{110}$, i.e., $(D_{110}/(D_{311} + D_{110}))$ of 0.32 to 0.95 as measured from X-ray diffraction spectrum of the iron composite particles, a noble metal content of 0.05 to 3.0% by weight, an Al content of 0.20 to 1.20% by weight, an Fe content of 70 to 90% by weight, an S content of 3800 to 10000 ppm, an average particle diameter of 0.05 to 0.30 $\mu$m, a saturation magnetization value of 90 to 190 $Am^2$/kg, a BET specific surface area value of 7.0 to 55 $m^2$/g, and a crystallite size of (110) plane of $\alpha$-Fe of 200 to 350 Å.

In a sixth aspect of the present invention, there is provided a purifying agent for soil or ground water, comprising a water suspension containing as an effective ingredient, the iron composite particles as defined in any one of the first to fifth aspects.

In a seventh aspect of the present invention, there is provided a method for purifying soil or ground water, comprising:

treating soil or ground water contaminated with organohalogen compounds, with the iron composite particles as defined in any one of the first to fifth aspects or the purifying agent as defined in the sixth aspect.

In an eighth aspect of the present invention, there is provided a method for purifying soil or ground water, comprising:

directly injecting the iron composite particles as defined in any one of the first to fifth aspects or the purifying agent as defined in the sixth aspect, into soil or ground water contaminated with organohalogen compounds, at an in-situ position.

## DETAILED DESCRIPTION OF THE INVENTION

The present invention is described in detail below.

First, the iron composite particles for purifying soil or ground water according to the present invention (hereinafter referred to merely as "iron composite particles ") are described.

The iron composite particles of the present invention comprise an iron component, at least one noble metal selected from the group consisting of ruthenium, rhodium and palladium, and carbon or aluminum.

The iron composite particles of the present invention have a noble metal content of usually 0.01 to 5.00% by weight, preferably 0.05 to 3.00% by weight.

The iron composite particles of the present invention have a carbon content of usually 0.10 to 10.00% by weight, preferably 0.30 to 8.00% by weight, and an Al content of usually 0.10 to 1.50% by weight, preferably 0.20 to 1.20% by weight.

The iron composite particles of the present invention contain the iron component as a balance thereof, preferably 70.00 to 99.89% by weight.

The iron composite particles of the present invention have a particle diameter of usually 0.05 to 0.50 $\mu$m, preferably 0.05 to 0.30 $\mu$m.

The noble metal contained in the iron composite particles of the present invention is at least one metal selected from the group consisting of ruthenium, rhodium and palladium, preferably ruthenium and/or rhodium.

The preferred embodiments of the iron composite particles according to the present invention include the following particles.

(A) Iron composite particles for purifying soil or ground water, comprising an iron component composed of $\alpha$-Fe, carbon, and at least one noble metal selected from the group consisting of ruthenium, rhodium and palladium, wherein the iron composite particles have an Fe content of usually 85.00 to 99.89% by weight, a noble metal content of usually 0.01 to 5.00% by weight, a carbon content of usually 0.10 to 10.00% by weight and a particle diameter of usually 0.05 to 0.50 $\mu$m.

(B) Iron composite particles for purifying soil or ground water, comprising an iron component composed of $\alpha$-Fe and magnetite, aluminum, and at least one noble metal selected from the group consisting of ruthenium, rhodium and palladium, wherein the iron composite particles have a noble metal content of usually 0.01 to 5.00% by weight, an aluminum content of usually 0.10 to 1.50% by weight, a ratio of a diffraction intensity $D_{110}$ of (110) plane of $\alpha$-Fe to a sum of a diffraction intensity $D_{311}$ of (311) plane of magnetite and the diffraction intensity $D_{110}$, i.e., $(D_{110}/(D_{311} + D_{110}))$ of 0.30 to 0.95 as measured from X-ray diffraction spectrum of the iron composite particles, and an average particle diameter of usually 0.05 to 0.50 $\mu$m.

First, the iron composite particles (A) for purifying soil or ground water are described.

The iron composite particles (A) of the present invention have an Fe content of usually 85.00 to 99.89% by weight, preferably 87.00 to 99.80% by weight, more preferably 87.00 to 99.60% by weight, still more preferably 89.00 to 99.60% by weight. When the Fe content is less than 85.00% by weight, the active hydrogen production reaction by the $\alpha$-Fe tends to be lowered, so that the resultant iron composite particles tends to be deteriorated in decomposition performance, thereby failing to attain the aimed effects of the present invention. When the Fe content is more than 99.89% by weight, the coating effect of carbon tends to be decreased, and the BET specific surface area of the resultant iron composite particles tends to be excessively small, resulting in considerable deterioration in decomposition activity to the organohalogen compounds.

The iron composite particles (A) of the present invention have a carbon content of usually 0.10 to 10.00% by weight, preferably 0.30 to 9.00% by weight, more preferably 0.30 to 8.00% by weight. When the carbon content is less than 0.10% by weight, the coating effect of carbon tends to be decreased, resulting in poor decomposition activity to the organohalogen compounds. When the carbon content is more than 10.00% by weight, the active hydrogen production reaction by the $\alpha$-Fe tends to be obstructed, resulting in poor decomposition activity to the organohalogen compounds.

The iron composite particles (A) of the present invention have a noble metal content of usually 0.01 to 5.00% by weight, preferably 0.05 to 4.00% by weight, more preferably 0.05 to 3.00% by weight. When the noble metal content is less than 0.01% by weight, the effect obtained by carrying the noble metal tends to be decreased, resulting in poor catalytic activity. When the noble metal content is more than 5.00% by weight, the effect obtained by increasing an amount of the noble metal tends to be already saturated, resulting in uneconomical process.

Meanwhile, the iron composite particles (A) of the present invention may also contain impurities such as Na, Ca, S, Al and Si which are inevitably present owing to various raw materials.

The iron composite particles (A) of the present invention may have either an acicular shape, a spindle shape or a spherical shape.

The iron composite particles (A) of the present invention have a particle diameter of usually 0.05 to 0.50 $\mu$m, preferably 0.05 to 0.30 $\mu$m.

The BET specific surface area value of the iron composite particles (A) according to the present invention is usually 5.0 to 100 m$^2$/g, preferably 5.0 to 60 m$^2$/g. When the BET specific surface area value is less than 5.0 m$^2$/g, the contact area of the particles tends to be small, so that it may be difficult to exhibit a sufficient catalytic activity. When the BET specific surface area value is more than 100 m$^2$/g, the $\alpha$-Fe tends to become unstable, and the carbon content tends to be excessive, so that it may be difficult to attain a stable catalytic activity.

Next, the iron composite particles (B) for purifying soil or ground water according to the present invention are described.

The iron composite particles (B) of the present invention have such an Fe$_3$O$_4$ content that a ratio of a diffraction intensity $D_{110}$ of (110) plane of $\alpha$-Fe to a sum of a diffraction intensity $D_{311}$ of (311) plane of Fe$_3$O$_4$ and the diffraction intensity $D_{110}$, i.e., $(D_{110}/(D_{311} + D_{110}))$ is usually 0.30 to 0.95, preferably 0.32 to 0.95 as measured from X-ray diffraction spectrum of the iron composite particles. When the intensity ratio $(D_{110}/(D_{311} + D_{110}))$ of the iron composite particles immediately after production thereof is less than 0.30, the iron composite particles tend to be insufficient in purification performance for organohalogen compounds because of a too low $\alpha$-Fe phase content therein, thereby failing to attain the aimed effects of the present invention. When the intensity ratio $(D_{110}/(D_{311} + D_{110}))$ is more than 0.95, although a sufficient amount of the $\alpha$-Fe phase is present, the content of the Fe$_3$O$_4$ phase produced according to the present invention is lowered, so that the iron composite particles tend to be early deteriorated in catalytic activity, and it is not possible to maintain a good catalytic activity thereof for a long period of time, thereby also failing to attain the aimed effects of the present invention. In addition, Fe$_3$O$_4$ is preferably present on the surface of the iron composite particles.

The iron composite particles (B) of the present invention have a noble metal content of usually 0.01 to 5.00% by weight, preferably 0.05 to 4.00% by weight, more preferably 0.05 to 3.00% by weight. When the noble metal content is less than 0.01% by weight, the effect obtained by carrying the noble metal tends to be decreased, resulting in poor catalytic activity. When the noble metal content is more than 5.00% by weight, the effect obtained by increasing an amount of the noble metal tends to be no longer saturated, resulting in uneconomical process.

The Al content of the iron composite particles (B) according to the present invention is usually 0.10 to 1.50% by weight, preferably 0.20 to 1.20% by weight. When the Al content is less than 0.10% by weight, the obtained iron composite particles tend to become a hard granulated product due to volume shrinkage thereof, so that wet pulverization thereof tends to be difficult. When the Al content is more than 1.50% by weight, the reduction reaction of the goethite or hematite particles tends to proceed too slowly and, therefore, require a long period of time. In addition, since crystal growth of the iron composite particles is insufficient, the $\alpha$-Fe phase contained therein tends to become unstable, and a too thick oxidation film tends to be formed on the surface of the particles. Further, since the phase change from the $Fe_3O_4$ phase to the $\alpha$-Fe phase is insufficient upon the heat reduction reaction, it may be difficult to enhance the $\alpha$-Fe phase content, thereby failing to attain the aimed effects of the present invention.

The iron composite particles (B) of the present invention have an Fe content of usually not less than 70.00% by weight, preferably 70.00 to 98.00% by weight, more preferably 70.00 to 90.00% by weight based on the weight of the whole particles. When the Fe content in the iron composite particles immediately after the production thereof is less than 70.00% by weight, the iron composite particles tend to be deteriorated in catalytic activity, so that it may be difficult to attain the aimed effects of the present invention.

The iron composite particles (B) of the present invention preferably have a granular shape. In the present invention, since the spindle-shaped or acicular goethite or hematite particles are directly subjected to heat reduction treatment, the particles undergo breakage of particle shape upon transformation into the $\alpha$-Fe phase crystals, and are formed into a granular shape through isotropic crystal growth thereof. On the contrary, spherical particles have a smaller BET specific surface area than that of granular particles if the particle sizes thereof are identical and, therefore, exhibit a less catalytic activity than that of the granular particles. Therefore, the iron composite particles preferably contain substantially no spherical particles.

The iron composite particles (B) of the present invention have an average particle diameter of usually 0.05 to 0.50 $\mu$m, preferably 0.05 to 0.30 $\mu$m. When the average particle diameter of the iron composite particles is less than 0.05 $\mu$m, the $\alpha$-Fe phase tends to become unstable, resulting in formation of a thick oxidation film on the surface thereof, so that it may be difficult to increase the $\alpha$-Fe phase content and attain the aimed effects of the present invention. When the average particle diameter of the iron composite particles is more than 0.50 $\mu$m, although the $\alpha$-Fe phase content is increased, the $Fe_3O_4$ phase content is relatively lowered, so that the iron composite particles tend to be early deteriorated in catalytic activity, and it is not possible to maintain a good catalytic activity thereof for a long period of time. As a result, it may be difficult to attain the aimed objects of the present invention.

The crystallite size of (110) plane of $\alpha$-Fe of the iron composite particles (B) according to the present invention is usually 200 to 400 Å, preferably 200 to 350 Å. When the crystallite size is less than 200 Å, it may be difficult to increase the $\alpha$-Fe phase content, thereby failing to attain the aimed effects of the present invention. When the crystallite size is more than 400 Å, although the $\alpha$-Fe phase content is increased, it may be difficult to retain the content of $Fe_3O_4$ phase to such an extent capable of attaining the aimed effects of the present invention.

The BET specific surface area value of the iron composite particles (B) according to the present invention is usually 5.0 to 60 m²/g, preferably 7.0 to 55 m²/g. When the BET specific surface area value is less than 5.0 m²/g, the contact area of the iron composite particles tends to be decreased, thereby failing to show a sufficient catalytic activity. When the BET specific surface area value is more than 60 m²/g, it may be difficult to increase the $\alpha$-Fe phase content, thereby failing to attain the aimed effects of the present invention.

The iron composite particles (B) of the present invention have a saturation magnetization value of usually 85 to 190 Am²/kg (85 to 190 emu/g), preferably 90 to 190 Am²/kg (90 to 190 emu/g). When the saturation magnetization value of the iron composite particles immediately after production thereof is less than 85 Am²/kg, the $\alpha$-Fe phase content of the iron composite particles tends to be decreased, thereby failing to attain the aimed effects of the present invention. When the saturation magnetization value is more than 190 Am²/kg, although the $\alpha$-Fe phase content is increased, it may be difficult to maintain the content of the $Fe_3O_4$ phase to such an extent capable of attaining the aimed effects of the present invention. As a result, since the $Fe_3O_4$ phase content is relatively lowered, the iron composite particles tend to be early deteriorated in catalytic activity, and it is not possible to maintain a good catalytic activity thereof for a long period of time, thereby failing to attain the aimed effects of the present invention.

The S content of the iron composite particles (B) according to the present invention is usually 3500 to 10000 ppm, preferably 3800 to 10000 ppm, more preferably 3800 to 9500 ppm. When the S content is less than 3500 ppm, the obtained iron composite particles tend to be insufficient in purification performance for the organohalogen compounds, thereby failing to attain the aimed effects of the present invention. When the S content is more than 10000 ppm, although the obtained iron composite particles show a sufficient purification performance for the organohalogen compounds, the purification effect due to the S content is already saturated, and the use of such a large S content is, therefore, uneconomical.

The iron composite particles (B) of the present invention preferably contain substantially no toxic metal elements other than noble metals, such as Pb, Cd, As, Hg, Sn, Sb, Ba, Zn, Cr, Nb, Co and Bi.

Meanwhile, the iron composite particles (A) and (B) may be in the form of a granulated product.

Next, the processes for producing the iron composite particles (A) and (B) according to the present invention,

are described.

The iron composite particles (A) containing the noble metal and carbon according to the present invention can be produced, for example, by any of the following methods.

(1) Iron oxide particles and organic substances as raw carbon materials are mixed with each other, and then subjected to heat decomposition treatment in an inert gas atmosphere to coat the surface of the iron oxide particles with carbon, thereby producing iron oxide-carbon composite particles. Next, the thus obtained iron oxide-carbon composite particles are immersed in an aqueous noble metal salt solution, and then subjected to reduction treatment, thereby producing iron composite particles (A) in which the surface of $\alpha$-Fe particles is coated with carbon, and the noble metal particles are carried thereon.

(2) Iron oxide particles and organic substances as raw carbon materials are mixed with each other, and then subjected to heat decomposition treatment in an inert gas atmosphere and successively to reduction treatment, thereby producing $\alpha$-Fe-carbon composite particles in which the surface of the $\alpha$-Fe particles is coated with carbon. Next, colloidal noble metal is carried on the thus obtained $\alpha$-Fe-carbon composite particles to produce iron composite particles (A).

(3) After carrying a carbon substance on the surface of iron oxide particles, the resultant particles are immersed in an aqueous noble metal salt solution and then subjected to reduction treatment, thereby producing iron composite particles in which the surface of $\alpha$-Fe particles is coated with carbon, and the noble metal particles are carried thereon.

(4) After carrying a carbon substance on the surface of iron oxide particles, the resultant particles are subjected to reduction treatment, thereby producing iron composite particles in which the surface of $\alpha$-Fe particles is coated with carbon. Next, colloidal noble metal is carried on the thus obtained $\alpha$-Fe-carbon composite particles to produce iron composite particles (A).

Examples of the iron oxide used in the above methods may include at least one material selected from the group consisting of iron oxide hydroxides such as $\alpha$-FeO(OH), ferric oxides such as $\alpha$-Fe$_2$O$_3$, and triiron tetraoxides such as Fe$_3$O$_4$, and mixtures of any two or more thereof. The iron oxide particles have an average particle diameter of usually 0.05 to 0.50 $\mu$m, preferably 0.05 to 0.30 $\mu$m, and a BET specific surface area of usually 2.0 to 150 m$^2$/g, preferably 5.0 to 150 m$^2$/g. The iron oxide particles may have either an acicular shape, a spindle shape or a spherical shape.

The organic substances as raw carbon materials are not particularly restricted as long as these substances are capable of forming carbides in an inert gas atmosphere. Examples of the organic substances as raw carbon materials may include thermosetting resins such as phenol resins, high-molecular compounds such as polyvinyl alcohol and carboxymethyl cellulose, coconut husk powder, wood chip powder, etc. Examples of the carbon substance may include carbon black, activated carbon, coke, etc.

The amount of the organic substances as raw carbon materials mixed is usually in the range of 1.0 to 100% by weight, preferably 5.0 to 100% by weight, more preferably 5.0 to 50.0% by weight based on the weight of the iron oxide. When the amount of the organic substances mixed is less than 1.0% by weight, the resultant composite particles tend to have a too low carbon content of less than 0.50% by weight. When the amount of the organic substances mixed is more than 100% by weight, the resultant composite particles tend to have a too high carbon content of more than 10.00% by weight.

Also, in the above methods (3) and (4), the amount of the carbon substance mixed is usually in the range of 1.0 to 50% by weight, preferably 1.0 to 40% by weight, more preferably 1.0 to 30% by weight based on the weight of the iron oxide.

In the above method (1) or (2), the iron oxide particles and the organic substances may be usually mixed with each other using a dry-type mixer such as a Henschel mixer and an edge runner. Further, the resultant mixture is preferably formed into granules or pellets using an extrusion molding machine or a compression molding machine. The thus molded granules or pellets can be suitably treated in a heat decomposition furnace or reduction furnace of a fixed bed type. Besides, when the granules or pellets are formed into composite particles, the resultant particles can still maintain the molded configuration and, therefore, can be suitably filled in columns, etc., upon use. When mixing the iron oxide particles and the organic substances with each other, there may be used a solvent such as ethanol and water.

In addition, in the above method (3) or (4), the carbon substance may also be carried on the surface of the iron oxide particles using a dry-type mixer such as a Henschel mixer and an edge runner. In this case, in order to firmly carry the carbon substance on the surface of the iron oxide particles, the iron oxide particles may be previously treated with a surface-treating agent such as organosilicon compounds and surfactants. The thus obtained carbon substance-carried iron oxide particles are preferably formed into granules or pellets using an extrusion molding machine or a compression molding machine.

The heat-decomposition temperature of the mixture of the iron oxide particles and the organic substance is usually in the range of 350 to 600°C, preferably 400 to 600°C, more preferably 400 to 550°C. When the heat-decomposition temperature is less than 350°C, the carbonization reaction of the organic substance may fail to proceed sufficiently, so that the resultant iron composite particles tend to be deteriorated in catalytic activity. When the heat-decomposition temperature is more than 600°C, a residual carbon content in the resultant iron composite particles tends to be lowered due to accelerated sublimation of the organic substance, and the BET specific surface area thereof tends to be decreased due to accelerated sintering of the iron oxide particles, resulting in deteriorated catalytic activity of the resultant iron composite particles. The heat-decomposition atmosphere is not particularly restricted as long as an inert gas atmosphere is used. The heat-decomposition atmosphere is preferably a nitrogen atmosphere.

The above heat decomposition treatment enables production of the iron oxide-carbon composite particles in which the surface of the iron oxide particles is coated with carbon.

The reduction temperature of the iron oxide-carbon composite particles is usually in the range of 350 to 600°C, preferably 400 to 600°C, more preferably 400 to 550°C. When the reduction temperature is less than 350°C, the reduction reaction of the iron oxide into $\alpha$-Fe may fail to proceed sufficiently, so that the resultant iron composite particles tend to be deteriorated in catalytic activity. When the reduction temperature is more than 600°C, a residual carbon content in the resultant iron composite particles tends to be decreased due to accelerated sublimation of the organic substance, and the BET specific surface area thereof tends to be decreased due to accelerated sintering of $\alpha$-Fe, resulting in deteriorated catalytic activity of the resultant iron composite particles. The reducing atmosphere is not particularly restricted. Although any reducing atmosphere may be used in the present invention, the reducing atmosphere is preferably a hydrogen atmosphere.

The reduction treatment enables production of the composite particles in which the surface of the $\alpha$-Fe particles is coated with carbon. In addition, when immersed in the aqueous noble metal salt solution, there are obtained composite particles in which the surface of the $\alpha$-Fe particles is coated with carbon, and the noble metal particles are carried thereon.

Also, in the above method (3) or (4), the reduction temperature and reducing atmosphere used for subjecting the carbon substance-coating iron oxide particles to reduction treatment, may be the same as those used above.

The iron composite particles (B) containing the noble metal and aluminum according to the present invention can be produced, for example, by the following method.

That is, the iron composite particles (B) of the present invention can be produced by producing goethite particles by ordinary method and then, if required, heating the goethite particles to form hematite particles; heat-reducing the goethite particles or hematite particles to produce iron particles; forming a surface oxidation film on the iron particles in a gas phase and then transferring the surface-oxidizing iron particles in water, or transferring the iron particles in water and then forming the surface oxidation film thereon in water, thereby producing a water suspension containing iron composite particles composed of $\alpha$-Fe and magnetite; carrying and coating the noble metal on the surface of the iron composite particles; and then subjecting the resultant particles to filtration, water-washing and drying.

More specifically, the water suspension containing the iron composite particles composed of $\alpha$-Fe and magnetite according to the present invention can be produced by heat-reducing goethite particles having an average major axis diameter of usually 0.05 to 0.50 $\mu$m, an Al content of usually 0.06 to 1.00% by weight and an S content of usually 2200 to 5500 ppm or hematite particles having an average major axis diameter of usually 0.05 to 0.50 $\mu$m, an Al content of usually 0.07 to 1.13% by weight and an S content of usually 2400 to 8000 ppm in a temperature range of usually 350 to 600°C to obtain iron particles; and forming a surface oxidation film on the surface of the iron particles in a gas phase and then transferring the surface-oxidizing iron particles in water, or transferring the iron particles in water and forming the surface oxidation film on the surface of the iron particles in water.

The goethite particles can be produced by ordinary methods, for example, by passing an oxygen-containing gas such as air through a suspension containing a ferrous-containing precipitate such as hydroxides or carbonates of iron which is obtained by reacting a ferrous salt-containing aqueous solution with at least one compound selected from the group consisting of alkali hydroxides, alkali carbonates and ammonia.

Meanwhile, in order to obtain the iron composite particles having a less amount of impurities, as the ferrous salt-containing aqueous solution, there are preferably used high-purity solutions that are deceased in content of impurities such as heavy metals.

In order to reduce the amount of impurities contained in the ferrous salt-containing aqueous solution, there may be used, for example, such a method in which a steel plate is washed with sulfuric acid to dissolve out, thereby removing impurities, rust-preventive oils or the like which are deposited on the surface thereof, and then the resultant impurity-free steel plate is dissolved to prepare a high-purity aqueous ferrous salt solution. On the other hand, the use of solutions obtained by acid-washing scrap irons containing a large amount of metal impurities other than iron, steel plates subjected to plating treatment, phosphate treatment or chromic acid treatment for improving corrosion resistance thereof, or steel plates coated with rust-preventive oils, is undesirable, because impurities tend to remain in the obtained iron composite particles, thereby causing such a risk that the impurities is eluted from the iron composite particles into soil or ground water to be purified. Alternatively, there may also be used a method of adding alkali such as alkali hydroxides to a ferrous sulfate solution by-produced from titanium oxide production process, etc., to adjust the pH value thereof, thereby insolubilizing and precipitating titanium as well as other impurities in the from of hydroxides thereof; and then removing the resultant precipitates from the reaction solution by ultra-filtration, etc. Among these methods, the method of dissolving the steel plate having a less amount of impurities with sulfuric acid is preferred, and the method is more preferably followed by removing the impurities from the obtained aqueous ferrous salt solution by adjusting the pH value thereof. All of the above-described methods are industrially applicable without problems and are also advantageous from economical viewpoints.

The goethite particles used in the present invention have an average major axis diameter of usually 0.05 to 0.50 $\mu$m and an S content of usually 2200 to 5500 ppm, and may be either spindle-shaped particles or acicular particles. In addition, the goethite particles have an aspect ratio of usually 4:1 to 30:1, more preferably 5:1 to 25:1, and a BET specific surface area of usually 20 to 200 m$^2$/g, preferably 25 to 180 m$^2$/g.

In the present invention, it is important to incorporate Al into the goethite particles or coat the goethite particles with Al. The incorporation or coating of Al allows a granulated product of the goethite particles to exhibit a limited volume shrinkage, resulting in well-controlled hardness of the granulated product. Therefore, wet pulverization of the granulated product of the goethite particles can be facilitated. Further, the size of primary particles of the goethite particles can be relatively reduced, resulting in relatively large specific surface area thereof as well as enhancement in purification performance.

The amount of Al incorporated into or coated on the goethite particles is usually 0.06 to 1.00% by weight.

Meanwhile, the goethite particles are preferably previously granulated by ordinary methods. The granulated goethite particles become usable in a fixed bed-type reducing furnace. Further, the iron composite particles obtained from the granulated goethite particles can still maintain a shape of the granulated product under some reducing conditions and, therefore, can be suitably used for filling into columns, etc.

The resultant goethite particles are preferably heat-dehydrated at a temperature of 250 to 350°C to transform the particles into hematite particles.

The S content of the hematite particles can be well controlled by using goethite particles previously having a high S content. Also, in the case of the goethite particles having a low S content, the S content of the hematite particles may be controlled by adding sulfuric acid to a water suspension containing the hematite particles.

The thus obtained hematite particles have an average major axis diameter of usually 0.05 to 0.50 $\mu$m, and an S content of usually 2400 to 8000 ppm. The amount of Al contained in or coated on the hematite particles is usually 0.07 to 1.13% by weight.

The goethite particles or the hematite particles are heat-reduced at a temperature of usually 350 to 600°C to produce iron particles ($\alpha$-Fe).

When the heat-reduction temperature is less than 350°C, the reduction reaction tends to proceed too slowly, resulting in a prolonged reduction reaction time. Even though the BET specific surface area of the particles may be increased under such a low temperature condition, a sufficient crystal growth of the particles tends to be inhibited, resulting in formation of unstable $\alpha$-Fe phase and too thick oxidation film on the surface of the particles, or insufficient phase transfer from Fe$_3$O$_4$ phase to $\alpha$-Fe phase. As a result, it may be difficult to increase the $\alpha$-Fe phase content. When the heat-reduction temperature is more than 600°C, the reduction reaction tends to proceed too rapidly, so that sintering within or between the particles is excessively accelerated, resulting in a too large particle size and a too small BET specific surface area of the obtained particles.

Meanwhile, as the atmosphere upon the heating in the reduction reaction, there may be used hydrogen gas, nitrogen gas or the like. Among these atmospheres, hydrogen gas is preferred from industrial viewpoints.

The iron particles obtained after the heat-reduction are cooled, oxidized in a gas phase to form an oxidation film made of Fe$_3$O$_4$ on the surface thereof, and then taken out and transferred into water. Alternatively, the iron particles are transferred into water and then oxidized in water to form the oxidation film on the surface thereof.

The surface oxidation film may be produced by a method of once replacing the atmosphere after the reduction reaction with an inert gas and then gradually increasing an oxygen content in the inert gas until finally replacing the inert gas with air, a method of gradually oxidizing the iron particles with a mixed gas composed of oxygen and water vapor, etc., thereby taking out the surface-oxidized iron particles in air. Meanwhile, the surface oxidation film is preferably formed in a gas phase at a temperature of not more than 150°C, and further when the iron particles are transferred into water, the iron particles are preferably cooled to a temperature of not more than 100°C.

On the other hand, when the iron particles are transferred into water without forming the oxidation film in a gas phase, the iron particles are also preferably cooled to a temperature of not more than 100°C. It is considered that in the case where the iron particles are directly transferred into water after the heat-reduction without forming the surface oxidation film in a gas phase, water is decomposed into hydrogen and oxygen by a catalytic activity of the $\alpha$-Fe, so that the $\alpha$-Fe is oxidized by the thus generated oxygen to form an oxidation film made of Fe$_3$O$_4$ on the surface of the iron particles.

Meanwhile, although the cooling atmosphere after the heat-reduction may be either nitrogen or hydrogen, it is preferred that the atmosphere is finally replaced with nitrogen.

Next, the resultant water suspension containing the iron composite particles composed of $\alpha$-Fe and magnetite is wetpulverized and dispersed using a wet pulverizer.

As the pulverizer usable for the wet pulverization in the present invention, in the case where grinding media are employed, there may be used vessel-drive type mills, e.g., rolling mills such as pot mill, tube mill and conical mill, vibration mills such as fine vibration mill, or the like; and media-agitation type mills, e. g., tower type mills such as tower mill, agitation tank type mills such as attritor, flowing tube type mills such as sand grind mill, annular type mills such as annular mill, or the like. In the case where no grinding media are employed, there may be used shear/friction type mills, e.g., vessel rotating type mills such as Wong mill, wet high-speed rotation type mills such as colloid mill, homomixer, line mixer, or the like.

The concentration of the iron composite particles contained in the water suspension upon the wet pulverization is usually 20 to 40% by weight. When the concentration of the iron composite particles is less than 20% by weight, it may be difficult to apply a suitable stress such as shear force upon the pulverization, thereby failing to pulverize the iron composite particles into the aimed particle size, or resulting in prolonged pulverization time. Further, the grinding media required for the wet pulverization may suffer from severe abrasion. When the concentration of the iron composite particles is more than 40% by weight, the water suspension may exhibit a too high viscosity, thereby requiring a large mechanical load, so that it may be difficult to industrially produce the aimed particles.

After completion of the wet pulverization, noble metal is carried or coated on the surface of the iron composite particles composed of $\alpha$-Fe and magnetite, and then the resultant particles are subjected to filtration, water-washing and drying, thereby producing the iron composite particles according to the present invention.

The noble metal may be carried or coated by previously impregnating the goethite or hematite particles before the heat-reduction with nitrates, acetates or chlorides of the noble metal, and then subjecting the thus treated goethite or hematite particles to the heat-reduction treatment as well as the subsequent treatments.

Further, as the method of carrying or coating the noble metal on the surface of the iron composite particles composed of $\alpha$-Fe and magnetite, there may be used a method of adding and mixing an aqueous noble metal salt solution in the water suspension containing the iron composite particles to replace $Fe^0$ or $Fe^{2+}$ present on the surface of the iron composite particles with noble metal ions for plating the particles with the noble metal, a method of adding and mixing a noble metal colloid-containing solution in the water suspension containing the iron composite particles to carry the colloidal noble metal on the surface of the iron composite particles, etc.

As the noble metal salt, there may be used nitrates, acetates, chlorides or the like of ruthenium, rhodium and palladium.

The drying atmosphere after the filtration and water-washing may be appropriately selected from nitrogen, air, vacuum, etc. The drying temperature is preferably not more than 100°C.

Next, the purifying agent for purifying soil or ground water contaminated with organohalogen compounds (hereinafter referred to merely as "purifying agent") is described.

The purifying agent of the present invention is in the form of a water suspension containing the above iron composite particles as an effective ingredient. For example, the purifying agent of the present invention is in the form of a water suspension containing as an effective ingredient, the iron composite particles comprising an iron component, at least one noble metal selected from the group consisting of ruthenium, rhodium and palladium, and carbon or aluminum, and have a noble metal content of 0.01 to 5.00% by weight and a particle diameter of 0.05 to 0.50 $\mu$m.

In particular, the following purifying agents are preferred.

(I) A water suspension containing as an effective ingredient, the iron composite particles comprising an iron component composed of $\alpha$-Fe, carbon and at least one noble metal selected from the group consisting of ruthenium, rhodium and palladium, wherein the iron component comprises $\alpha$-Fe, and have an Fe content of 85.00 to 99.89% by weight, a noble metal content of 0.01 to 5.00% by weight, a carbon content of 0.10 to 10.00% by weight and a particle diameter of 0.05 to 0.50 $\mu$m.

(II) A water suspension containing as an effective ingredient, the iron composite particles comprising an iron component composed of $\alpha$-Fe and magnetite, aluminum, and at least one noble metal selected from the group consisting of ruthenium, rhodium and palladium, wherein the iron composite particles have a noble metal content of 0.01 to 5.00% by weight, an Al content of 0.10 to 1.50% by weight, a ratio of a diffraction intensity $D_{110}$ of (110) plane of $\alpha$-Fe to a sum of a diffraction intensity $D_{311}$ of (311) plane of magnetite and the diffraction intensity $D_{110}$, i.e., ($D_{110}/(D_{311} + D_{110})$) of 0.30 to 0.95 as measured from X-ray diffraction spectrum of the iron composite particles, and an average particle diameter of 0.05 to 0.50 $\mu$m.

The content of the iron composite particles in the water suspension is usually in the range of 10 to 40% by weight, preferably 10 to 30% by weight. When the content of the iron composite particles is more than 40% by weight, the viscosity of the purifying agent tends to be increased, thereby failing to smoothly transmit mechanical load or force upon stirring through the purifying agent and, therefore, uniformly mix the purifying agent. As a result, it may be difficult to control the concentration of the purifying agent.

The purifying agent of the present invention can be remarkably improved in penetrability into soil by incorporating thereinto at least one dispersant selected from the group consisting of polyacrylic acid and salts thereof, polyaspartic acid and salts thereof, and polymaleic acid and salts thereof, as compared to the conventional purifying agents. Among these dispersants, the polyaspartic acid and salts thereof and the polymaleic acid and salts thereof can exhibit a biodegradability and, therefore, undergo biodegradation by the action of microorganisms after injection into soil or ground water. Thus, since substantially no residues of the polyaspartic acid and salts thereof, and the polymaleic acid and salts thereof are accumulated in environment, the purifying agent containing the polyaspartic acid and salts thereof, and the polymaleic acid and salts thereof can be suitably used as a dispersant for in-situ purifying agents.

The specific gravity of the purifying agent according to the present invention is usually 1.2 to 1.4. When the specific gravity is less than 1.2, the purifying agent tends to be uneconomical owing to a less solid content therein in the consideration of transportation of the purifying agent, amount of the purifying agent added to soil, etc. When the specific gravity is more than 1.4, the purifying agent has a too high viscosity in view of diameters of the primary and secondary particles contained therein and, therefore, may be difficult to industrially produce.

Meanwhile, the purifying agent of the present invention may be composed of the above iron composite particles solely.

Next, the process for producing the purifying agent according to the present invention is described.

The purifying agent for purifying soil or ground water contaminated with organohalogen compounds according to the present invention may be produced by the following method. That is, in the process for producing the above iron composite particles (B), after carrying or coating a noble metal on the surface of the iron composite particles composed of $\alpha$-Fe and magnetite, the resultant particles are washed with water by decantation method. The resultant water suspension containing the iron composite particles may be directly used as a purifying agent.

Alternatively, after previously impregnating goethite or hematite particles with nitrates, acetates or chlorides of the noble metal and then subjecting the resultant particles to heat-reduction treatment, the thus obtained iron-noble metal particles are cooled; oxidized in a gas phase to form an oxidation film on the surface thereof and then transferred into water, or transferred into water and then oxidized in water to form the oxidation film on the surface thereof; pulverized by a wet pulverizer to prepare a water suspension thereof; and then washed with water by decantation method. The resultant water suspension containing the iron composite particles may be directly used as a purifying agent.

Further, the iron composite particles (A) of the present invention may be charged into water, and then pulverized and dispersed by a wet pulverizer to prepare a water suspension thereof as a purifying agent.

The purifying agent of the present invention may contain, if required, at least one dispersant selected from the group consisting of polyacrylic acid and salts thereof, polyaspartic acid and salts thereof, and polymaleic acid and salts thereof. Since the respective dispersants are watersoluble, the dispersants may be added in the form of particles or an aqueous solution directly to the water suspension containing the iron composite particles, and the resultant mixture may be stirred and mixed together.

Next, the method for purifying soil, ground water or waste water contaminated with organohalogen compounds according to the present invention (decomposition treatment method) is described.

The decomposition treatment of organohalogen compounds contained in soil or ground water is generally classified into the "in-situ decomposition" method wherein contaminants contained therein are directly decomposed under the ground, and the "in-situ extraction" method wherein soil or ground water containing contaminants is excavated or extracted and then the contaminants contained therein are decomposed in place. In the present invention, both of these methods are usable. Among these methods, preferred is the "in-situ decomposition" method.

In the in-situ decomposition method, the iron composite particles or the purifying agent according to the present invention may be directly penetrated into the underground, or introduced into the underground through drilled bore, using a transferring medium including gas media such as high-pressure air and nitrogen or water. In particular, since the purifying agent of the present invention is in the form of a water suspension, the purifying agent may be directly used, or may be used in the form of a diluted solution, if required.

In the in-situ extraction method, the excavated soil may be mixed and stirred with the iron composite particles or the purifying agent according to the present invention using edge runner, Henschel mixer, concrete mixer, Nauter mixer, single-or twin-screw kneader type mixer, or the like. Also, the pumped ground water may be mixed and contacted with the iron composite particles or the purifying agent according to the present invention in a batch reaction vessel, or may be passed through a column, etc., which are filled with a molded product of the iron composite particles.

The purifying agent of the present invention may be used in the form of a diluted solution upon purification treatment such that a solid content of the solution is usually in the range of 0.01 to 20% by weight.

In addition, in the present invention, in order to improve penetrability into soil, the diluted purifying agent may also contain sodium hydrogencarbonate, sodium sulfate, sodium carbonate, sodium sulfite, sodium hydrogensulfite, etc.

The organohalogen compounds contained in waste water may be subjected to decomposition treatment by the same method as described above for treating the ground water.

The amount of the iron composite particles added may be appropriately determined according to concentration of the organohalogen compounds contained in soil, ground water and waste water. For example, in the case where contaminated soil is to be purified, the lower limit of the amount of the iron composite particles added is usually 0.01 part by weight, preferably 0.05 part by weight, more preferably 0.1 part by weight, still more preferably 0.5 part by weight based on 100 parts by weight of the soil, and the upper limit of the amount of the iron composite particles added is usually 50 parts by weight, preferably 30 parts by weight, more preferably 20 parts by weight based on 100 parts by weight of the soil. When the amount of the iron composite particles added is less than 0.01 part by weight, it may be difficult to attain the aimed effects of the present invention. When the amount of the iron composite particles added is more than 50 parts by weight, although the purification effect is enhanced, the use of such a large amount of the iron composite particles is uneconomical. Also, in the case where contaminated ground water and waste water is to be purified, the lower limit of the amount of the iron composite particles added is usually 0.01 part by weight, preferably 0.05 part by weight, more preferably 0.1 part by weight, still more preferably 0.5 part by weight based on 100 parts by weight of the ground water or waste water, and the upper limit of the amount of the iron composite particles added is usually 50 parts by weight, preferably 30 parts by weight, more preferably 20 parts by weight based on 100 parts by weight of the ground water or waste water.

Also, the amount of the iron composite particles added to the contaminated soil, ground water or waste water is usually 10 to 1000 parts by weight, preferably 10 to 500 parts by weight based on one part by weight of the organohalogen compounds contained therein. When the amount of the iron composite particles added is less than 10 parts by weight, it may be difficult to attain the aimed effects of the present invention. When the amount of the iron composite particles added is more than 1000 parts by weight, although the decomposition performance for the organohalogen compounds is increased, the use of such a large amount of the iron composite particles tends to be uneconomical.

Meanwhile, when the organohalogen compounds contained in the soil are subjected to decomposition treatment, an appropriate amount of water may be added thereto, if required.

Upon the purification treatment using the iron composite particles of the present invention, a residual percentage of the aromatic organohalogen compounds in the soil can be reduced to usually not more than 25%, preferably not more than 20%, and a residual percentage of the aromatic organohalogen compounds in the ground water and waste water can be reduced to usually not more than 25%, preferably not more than 20% when evaluated by the below-mentioned method.

Thus, the use of the composite particles according to the present invention enables the aromatic organohalogen compounds contained in soil, ground water and waste water to be decomposed in an efficient, continuous and economical manner.

The reasons why the aromatic organohalogen compounds can be effectively decomposed by the iron composite particles of the present invention, are considered as follows, though it is not clearly determined.

That is, in the case of the iron composite particles (A) of the present invention, since the carbon component is present on the surface of the $\alpha$-Fe particles, the organohalogen compounds can be readily adsorbed thereon and contacted therewith. As a result, it is considered that the frequency of contact between the iron composite particles of the present invention and the organohalogen compounds can be enhanced.

Further, it is also considered that upon decomposition of the organohalogen compounds using the iron composite particles of the present invention, active hydrogen is produced by reacting $\alpha$-Fe with water, and moved over the carbon present on the surface of the $\alpha$-Fe particles due to a so-called spillover phenomenon thereof, so that the organohalogen compounds absorbed on the surface of the noble metal particles undergo dehalogenation reaction therewith.

Also, it is considered that in the case of the iron composite particles (B) of the present invention, since the $\alpha$-Fe phase (0 valence) and $Fe_3O_4$ phase are present therein at a specific ratio, and a part of sulfur is present in a 0 valence form through the heat reduction step, the iron composite particles can exhibit a high reducing activity and, therefore, contribute to the decomposition reaction of the organohalogen compounds. Further, it is considered that upon decomposition of the organohalogen compounds, active hydrogen is produced by reacting the $\alpha$-Fe phase (0 valence) and $Fe_3O_4$ phase with water, and moved over the surface of the iron composite particles due to a so-called spillover phenomenon thereof, so that the organohalogen compounds absorbed on the surface of the noble metal phase undergo hydrogenation-dehalogenation reaction therewith.

In the present invention, by adding a specific amount of the Al compound to the iron composite particles, the obtained iron composite particles can be enhanced in decomposition activity to the organohalogen compounds. The reason therefor is considered as follows, though it is not clearly determined. That is, by incorporating Al into the iron composite particles, the primary particles thereof become finer, and agglomerates of the iron composite particles show a lower strength as compared to the conventional particles. Therefore, it becomes possible to wet-pulverize the iron composite particles into finer particles with a less difficulty as compared to the case where the same pulverization method is applied to the conventional particles. As a result, it is considered by the present inventors that since the iron composite particles are readily penetrated and dispersed into the soil or ground water, the decomposition activity to organohalogen compounds which is inherent to the iron composite particles can be sufficiently exhibited.

Thus, the iron composite particles of the present invention enable the organohalogen compounds, especially hardly-decomposable aromatic organohalogen compounds, to be efficiently decomposed, and are, therefore, suitably used as a purifying agent for soil or ground water contaminated with the aromatic organohalogen compounds.

In particular, since the iron composite particles of the present invention exhibit a high catalytic activity with a good persistency as described above, the purification treatment can be efficiently performed for a short period of time. In particular, the iron composite particles of the present invention are suitable for purifying soil, ground water and waste water contaminated with hardly-decomposable aromatic organohalogen compounds such as dioxins.

Also, the iron composite particles of the present invention together with a hydrogen-donating compound such as water can be directly mixed with dioxins and PCB to decompose these substances.

EXAMPLES

The present invention is described in more detail by Examples and Comparative Examples, but the Examples are only illustrative and, therefore, not intended to limit the scope of the present invention.

In the present invention, various properties were evaluated by the following methods.

(1) The average major axis diameter and the aspect ratio of goethite particles were measured from a transmission electron micrograph thereof (magnification: x 30000). The average particle diameters of hematite particles and iron composite particles were measured from a scanning electron micrograph thereof (magnification: x 30000).

(2) The specific surface area of the iron composite particles and iron oxide particles was expressed by the value measured by BET method using "Monosorb MS-11" manufactured by Cantachrom Co., Ltd.

(3) The Fe, Al and noble metal contents in the iron composite particles were measured as follows. That is, 0.20 g of the iron composite particles were dissolved under boiling in 30 mL of a solution prepared by diluting a mixed acid containing concentrated nitric acid and concentrated hydrochloric acid at a volume ratio of 1:3 with ion-exchanged water 2 times in volume. The resultant solution was further diluted with ion-exchanged water such that a total volume thereof was 2 L for Fe measurement or 100 mL for noble metal measurement. The obtained dilute solution was measured using a high-frequency inductively coupled plasma atomic emission spectroscopic apparatus "ICAP-575" manufactured by Japan Jarrel Ausch Co., Ltd.

The carbon and S contents in the iron composite particles were measured by "Carbon and Sulfur Analyzer EMIA-2200" manufactured by Horiba Seisakusho Co., Ltd., and expressed by the weight percentage calculated from each measured value based on a total amount of carbon and noble metal as 100% by weight.

(4) The crystal phase of the respective particles was identified by measuring a crystal structure of the particles in the range of 10 to 90° by X-ray diffraction method.

(5) The peak intensity ratio of the iron composite particles was determined by measuring a diffraction intensity $D_{110}$ of (110) plane of $\alpha$-Fe and a diffraction intensity $D_{311}$ of (311) plane of magnetite from the results of the above X-ray diffraction measurement and calculating a ratio of $D_{110}/(D_{311} + D_{110})$.

(6) The crystallite size ((110) plane of $\alpha$-Fe) of the iron composite particles was expressed by the thickness of crystallite in the direction perpendicular to each crystal plane of the particles as measured by X-ray diffraction method. The thickness value was calculated from the X-ray diffraction peak curve prepared with respect to each crystal plane according to the following Scherrer's formula:

$$\text{Crystallite Size } D_{110} = K\lambda/\beta\cos\theta$$

wherein $\beta$ is a true half value-width of the diffraction peak which was corrected as to the width of machine used (unit: radian); K is a Scherrer constant (= 0.9); $\lambda$ is a wavelength of X-ray used (Cu K$\alpha$-ray 0.1542 nm); and $\theta$ is a diffraction angle (corresponding to diffraction peak of each crystal plane).

(7) The saturation magnetization value of the iron composite particles was measured using a vibration sample magnetometer "VSM-3S-15" manufactured by Toei Kogyo Co., Ltd., by applying an external magnetic field of 795.8 kA/m (10 kOe) thereto.

(8) Evaluation for purification treatment of chlorobenzene contained in model soil:

<u><Preparation of calibration curve for model soil: quantitative determination of chlorobenzene></u>

The concentration of chlorobenzene was calculated from the calibration curve previously prepared according to the following procedure.

Chlorobenzene ($C_6H_5Cl$): molecular weight: 112.56; guaranteed reagent (99.5%); density (at 20°C): 1.115 g/mL

Chlorobenzene was used in three standard amounts (0.05 µL, 0.1 µL and 1.0 µL) in this procedure. 30 mL of ion-exchanged water was added into a 50-mL brown vial bottle (effective capacity: 68 mL) to seal 20 g of wet sandy soil (under 2 mm mesh sieve) filled therein. Next, after the respective standard amounts of chlorobenzene were poured into each vial bottle, the vial bottle was immediately closed with a rubber plug with a fluororesin liner, and then an aluminum seal was firmly tightened on the rubber plug. Thereafter, 50 µL of a headspace gas in the vial bottle was sampled using a syringe, and the amount of chlorobenzene contained in the sampled gas was measured by "GC-MS-QP5050" manufactured by Shimadzu Seisakusho Co., Ltd. Assuming that chlorobenzene was not decomposed at all, the relationship between the amount of chlorobenzene added and the peak area was determined from the measured values. The above analysis was carried out using a capillary column ("DB-1" manufactured by J & B Scientific Co. Ltd.; liquid phase: dimethyl polysiloxane) and He gas (flow rate: 143 L/min) as a carrier gas. Specifically, the sample was held at 40°C for 2 min and then heated to 250°C at a temperature rise rate of 10°C/min for analyzing the gas.

<u><Preparation of samples></u>

1.0 µL of chlorobenzene was previously added to 20 g of wet sandy soil (under 2 mm mesh sieve) to prepare a soil contaminated with chlorobenzene. A 50-mL brown vial bottle (effective capacity: 68 mL) was filled with 0.3 g of the iron composite particles or the purifying agent (corresponding to 0.3 g of the iron composite particles) as well as 30 mL of ion-exchanged water. Next, after the above-prepared contaminated soil was filled into the vial bottle, the vial bottle was immediately closed with a rubber plug with a fluororesin liner, and then an aluminum seal was firmly tightened on the rubber plug to allow the contents therein to stand and react with each other.

<u><Evaluation method></u>

The amount of residual chlorobenzene was measured as follows. That is, 50 µL of a headspace gas in the vial bottle was sampled using a syringe after the elapse of reaction time of 100 hours, and the amount of chlorobenzene contained in the sampled gas was measured by "GC-MS-QP5050" manufactured by Shimadzu Seisakusho Co., Ltd.

(9) Evaluation for purification treatment of chlorobenzene in model ground water and waste water:

<u><Preparation of calibration curve for model ground water and waste water: quantitative determination of chlorobenzene></u>

The same procedure as defined in the above "Preparation of calibration curve for model soil: quantitative determination of chlorobenzene" was conducted except that no sandy soil was added, thereby preparing a calibration curve for dummy ground water and waste water.

<u><Preparation of samples></u>

The above 50-mL brown vial bottle (effective capacity: 68 mL) was filled with 0.3 g of the iron composite particles or the purifying agent (corresponding to 0.3 g of the iron composite particles) as well as 30 mL of ion-exchanged water. Next, after 1 µL of chlorobenzene was filled into the vial bottle, the vial bottle was immediately closed with a rubber plug with a fluororesin liner, and then an aluminum seal was firmly tightened on the rubber plug to allow the contents therein to stand and react with each other.

<u><Evaluation method></u>

The amount of residual chlorobenzene was measured by the same method as described in "Evaluation method" of the previous item.

(10) Evaluation for purification treatment of dioxins in model soil:

<u><Preparation of samples></u>

A 50-mL brown vial bottle (effective capacity: 68 mL) was previously filled with 20 g of wet sandy soil (under 2 mm mesh sieve), 0.3 g of the iron composite particles or the purifying agent (corresponding to 0.3 g of the iron composite particles) and 30 mL of ion-exchanged water. Next, after 0.2 mL (corresponding to 8.2 ng-TEQ) of a dilute standard solution (41 ng-TEQ/mL) prepared by diluting a dioxins-mixed standard solution "DF-4943" produced by CIL Co., Ltd., as shown in Table 1, with acetone 100 times in volume, was filled into the vial bottle, the vial bottle was immediately closed with a rubber plug with a fluororesin liner, and then an aluminum seal was firmly tightened on the rubber plug to allow the contents therein to stand and react with each other.

<u>\<Evaluation method\></u>

After the elapse of reaction time of 200 hours, the dioxins contained in the solution, sandy soil and iron composite particles in the vial bottle were extracted by an ordinary method. The obtained extract was measured using a gas chromatographic mass spectrometer "AUTOSPEC ULTIMA" manufactured by MICROMASS Co., Ltd., for quantitative determination of the dioxins contained therein. The amount of residual dioxins was calculated as a toxic equivalent.

(11) Evaluation for purification treatment of dioxins in dummy ground water and waste water:

<u>\<Preparation of samples\></u>

A 50-mL brown vial bottle (effective capacity: 68 mL) was filled with 0.3 g of the iron composite particles or the purifying agent (corresponding to 0.3 g of the iron composite particles) as well as 30 mL of ion-exchanged water. Next, after 0.2 mL (corresponding to 8.2 ng-TEQ) of a dilute standard solution (41 ng-TEQ/mL) prepared by diluting a dioxins-mixed standard solution "DF-4943" produced by CIL Co., Ltd., as shown in Table 1, with acetone 100 times in volume, was filled into the vial bottle, the vial bottle was immediately closed with a rubber plug with a fluororesin liner, and then an aluminum seal was firmly tightened on the rubber plug to allow the contents therein to stand and react with each other.

<u>\<Evaluation method\></u>

The amount of residual dioxins was measured by the same method as described in "Evaluation method" of the previous item.

<u>Example 1:</u>

<u>\<$\alpha$-Fe-carbon-ruthenium composite particles\></u>

Using a fluid-type Henschel mixer "FM20C/I-Model" manufactured by Mitsui Kozan Co., Ltd., 4.0 kg of iron oxide hydroxide ($\alpha$-FeO(OH)) particles having a BET specific surface area of 85 $m^2$/g, were mixed with 0.40 kg of an ethanol solution containing 50% by weight of a phenol resin "BELPARL S890" produced by Kanebo Co., Ltd., (average molecular weight: 10000; residual monomer content: not more than 50 ppm) at 50°C and a rotation speed of 1400 rpm for 5 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mm$\phi$ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to heat-treatment at 500°C under a nitrogen atmosphere for 2 hours and then to reduction treatment at 450°C under a hydrogen atmosphere for 2 hours, thereby producing a molded product (6 mm$\phi$ x 8 mm) of $\alpha$-Fe-carbon composite particles containing 99.47% by weight of $\alpha$-Fe and 0.53% by weight of carbon and having a BET specific surface area of 10 $m^2$/g.
Next, 30 g of the molded product of $\alpha$-Fe-carbon composite particles was pulverized into particles in a mortar, and added to a 3-L beaker filled with 1.0 L of ion-exchanged water to prepare a water suspension thereof. Into the water suspension was added 0.59 L of an aqueous solution containing 0.5 mmol/L of ruthenium colloid ("TCU-111" produced by Toda Kogyo Co., Ltd.) under stirring, and the resultant mixture was further mixed under stirring for 30 min, and then filtered and washed with water. The obtained filter cake was dried at 30°C, thereby obtaining composite particles. As a result, it was confirmed that the obtained composite particles were $\alpha$-Fe-carbon-ruthenium composite particles which were composed of 99.37% by weight of $\alpha$-Fe, 0.53% by weight of carbon and 0.10% by weight of ruthenium, and had a BET specific surface area of 10 $m^2$/g and an average particle diameter of 0.20 $\mu$m (iron composite particles 1).

Example 2:

<α-Fe-carbon-ruthenium composite particles>

Using a fluid-type Henschel mixer "FM20C/I-Model" manufactured by Mitsui Kozan Co., Ltd., 4.0 kg of iron oxide hydroxide (α-FeO(OH)) particles having a BET specific surface area of 85 m$^2$/g , were mixed with 2.0 kg of an ethanol solution containing 50% by weight of a phenol resin "BELPARL S890" produced by Kanebo Co., Ltd., (average molecular weight: 10000; residual monomer content: not more than 50 ppm) at 50°C and a rotation speed of 1400 rpm for 10 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mmφ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to heat-treatment at 450°C under a nitrogen atmosphere for 2 hours and further to reduction treatment at 400°C under a hydrogen atmosphere for 3 hours, thereby producing a molded product (6 mmφ x 8 mm) of α-Fe-carbon composite particles containing 95.80% by weight of α-Fe and 4.20% by weight of carbon and having a BET specific surface area of 40 m$^2$/g.
Next, 30 g of the molded product of α-Fe-carbon composite particles was pulverized into particles in a mortar, and added to a 3-L beaker filled with 1.0 L of ion-exchanged water to prepare a water suspension thereof. Into the water suspension was added 1.18 L of an aqueous solution containing 0.5 mmol/L of ruthenium colloid ("TCU-111" produced by Toda Kogyo Co., Ltd.) under stirring, and the resultant mixture was further mixed under stirring for 30 min, and then filtered and washed with water. The obtained filter cake was dried at 30°C, thereby obtaining composite particles. As a result, it was confirmed that the obtained composite particles were α-Fe-carbon-ruthenium composite particles which were composed of 95.60% by weight of α-Fe, 4.20% by weight of carbon and 0.20% by weight of ruthenium, and had a BET specific surface area of 41 m$^2$/g and an average particle diameter of α-Fe of 0.18 μm (iron composite particles 2).

Example 3:

<α-Fe-carbon-rhodium composite particles>

Using a fluid-type Henschel mixer "FM20C/I-Model" manufactured by Mitsui Kozan Co., Ltd., 4.0 kg of iron oxide hydroxide (α-FeO(OH)) particles having a BET specific surface area of 85 m$^2$/g, were mixed with 0.80 kg of an ethanol solution containing 50% by weight of a phenol resin "BELPARL S890" produced by Kanebo Co., Ltd., (average molecular weight: 10000; residual monomer content: not more than 50 ppm) at 50°C and a rotation speed of 1400 rpm for 5 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mmφ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to heat-treatment at 500°C under a nitrogen atmosphere for 2 hours, thereby producing a molded product (6 mmφ x 8 mm) of triiron tetraoxide-carbon composite particles containing 92.40% by weight of triiron tetraoxide (Fe$_3$O$_4$) and 7.60% by weight of carbon and having a BET specific surface area of 71 m$^2$/g.
Next, 30 g of the molded product of triiron tetraoxide-carbon composite particles was impregnated with 10.6 mL of a 0.25 mol/L rhodium nitrate solution, and then dried at 80°C. The resultant dried product was subjected to reduction treatment at 450°C for 2 hours, thereby obtaining composite particles. As a result, it was confirmed that the obtained composite particles were α-Fe-carbon-rhodium composite particles which were composed of 97.50% by weight of α-Fe, 1.10% by weight of carbon and 1.40% by weight of rhodium, and had a BET specific surface area of 15 m$^2$/g and an average particle diameter of 0.22 μm (iron composite particles 3).

Example 4:

<α-Fe-carbon-palladium composite particles>

Using an edge runner "MPUV-2 Model" manufactured by Matsumoto Chuzo Tekkosho Co., Ltd., 10.0 kg of ferric oxide (α-Fe$_2$O$_3$) particles having a BET specific surface area of 10 m$^2$/g was mixed and stirred with 0.40 kg of a 50 wt% methyl triethoxysilane solution at a linear load of 40 kg/cm for 20 min. Next, the resultant mixture was mixed with 1.0 kg of carbon black "MA-100B" produced by Mitsubishi Kagaku Co., Ltd., and the obtained mixture was mixed under stirring together at linear load of 40 kg/cm for 20 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mmφ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to reduction treatment at 400°C under a hydrogen atmosphere for 3 hours, thereby producing a molded product (6 mm$\phi$ x 8 mm) of $\alpha$-Fe-carbon composite particles containing 95.70% by weight of $\alpha$-Fe and 4.30% by weight of carbon and having a BET specific surface area of 35 m$^2$/g.

Next, 30 g of the molded product of $\alpha$-Fe-carbon composite particles was pulverized into particles in a mortar, and added to a 3-L beaker filled with 1.0 L of ion-exchanged water to prepare a water suspension thereof. Into the water suspension was added 0.23 L of an aqueous solution containing 2.5 mmol/L of palladium colloid ("TCP-211" produced by Toda Kogyo Co., Ltd.) under stirring, and the resultant mixture was further mixed under stirring for 30 min, and then filtered and washed with water. The obtained filter cake was dried at 30°C, thereby obtaining composite particles. As a result, it was confirmed that the obtained composite particles were $\alpha$-Fe-carbon-palladium composite particles which were composed of 95.50% by weight of $\alpha$-Fe, 4.30% by weight of carbon and 0.20% by weight of palladium, and had a BET specific surface area of 35 m$^2$/g and an average particle diameter of metallic iron of 0.25 $\mu$m (iron composite particles 4).

Reference Example 1:

<$\alpha$-Fe-carbon-palladium composite particles>

Using an edge runner "MPUV-2 Model" manufactured by Matsumoto Chuzo Tekkosho Co., Ltd., 10.0 kg of ferric oxide ($\alpha$-Fe$_2$O$_3$) particles having a BET specific surface area of 10 m$^2$/g, were mixed and stirred with 0.40 kg of a 50 wt% methyl triethoxysilane solution at a linear load of 40 kg/cm for 20 min. Next, the resultant mixture was mixed and stirred with 2.5 kg of carbon black "MA-100B" produced by Mitsubishi Kagaku Co., Ltd., at linear load of 40 kg/cm for 20 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mm$\phi$ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to reduction treatment at 400°C under a hydrogen atmosphere for 3 hours, thereby producing a molded product (6 mm$\phi$ x 8 mm) of $\alpha$-Fe-carbon composite particles containing 89.50% by weight of $\alpha$-Fe and 10.50% by weight of carbon and having a BET specific surface area of 109 m$^2$/g.

Next, 30 g of the molded product of $\alpha$-Fe-carbon composite particles was pulverized into particles in a mortar, and added into a 3-L beaker filled with 1.0 L of ion-exchanged water to prepare a water suspension thereof. Into the water suspension was added 0.23 L of an aqueous solution containing 2.5 mmol/L of palladium colloid ("TCP-211" produced by Toda Kogyo Co., Ltd.) under stirring, and the resultant mixture was further mixed under stirring for 30 min, and then filtered and washed with water. The obtained filter cake was dried at 30°C, thereby obtaining composite particles. As a result, it was confirmed that the obtained composite particles were $\alpha$-Fe-carbon-palladium composite particles which were composed of 89.30% by weight of $\alpha$-Fe, 10.50% by weight of carbon and 0.20% by weight of palladium, and had a BET specific surface area of 89 m$^2$/g and an average particle diameter of metallic iron of 0.20 $\mu$m (iron composite particles 5).

Reference Example 2:

<$\alpha$-Fe-carbon-ruthenium composite particles>

Using a fluid-type Henschel mixer "FM20C/I-Model" manufactured by Mitsui Kozan Co., Ltd., 4.0 kg of iron oxide hydroxide ($\alpha$-FeO(OH)) particles having a BET specific surface area of 85 m$^2$/g, were mixed with 80 g of an ethanol solution containing 50% by weight of a phenol resin "BELPARL S890" produced by Kanebo Co., Ltd., (average molecular weight: 10000; residual monomer content: not more than 50 ppm) at 50°C and a rotation speed of 1400 rpm for 5 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mm$\phi$ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to heat-treatment at 500°C under a nitrogen atmosphere for 2 hours and then to reduction treatment at 450°C under a hydrogen atmosphere for 2 hours, thereby producing a molded product (6 mm$\phi$ x 8 mm) of $\alpha$-Fe-carbon composite particles containing 99.92% by weight of $\alpha$-Fe and 0.08% by weight of carbon and having a BET specific surface area of 5.2 m$^2$/g.

Next, 30 g of the molded product of $\alpha$-Fe-carbon composite particles was pulverized into particles in a mortar, and added into a 3-L beaker filled with 1.0 L of ion-exchanged water to prepare a water suspension thereof. Into the water suspension was added 0.59 L of an aqueous solution containing 0.5 mmol/L of ruthenium colloid ("TCU-111" produced by Toda Kogyo Co., Ltd.) under stirring, and the resultant mixture was further mixed under stirring for 30 min, and then filtered and washed with water. The obtained filter cake was dried at 30°C, thereby obtaining composite particles. As a result, it was confirmed that the obtained composite particles were $\alpha$-Fe-carbon-ruthenium composite particles which were composed of 99.82% by weight of $\alpha$-Fe, 0.08% by weight of carbon and 0.10% by weight of ruthenium, and had a BET specific surface area of 3.2 m$^2$/g and an average particle diameter of $\alpha$-Fe of 0.28 $\mu$m (iron composite particles 7).

Comparative Example 1:

<$\alpha$-Fe-carbon-ruthenium composite particles>

Using a fluid-type Henschel mixer "FM20C/I-Model" manufactured by Mitsui Kozan Co., Ltd., 4.0 kg of iron oxide hydroxide ($\alpha$-FeO(OH)) particles having a BET specific surface area of 85 m$^2$/g, were mixed with 0.40 kg of an ethanol solution containing 50% by weight of a phenol resin "BELPARL S890" produced by Kanebo Co., Ltd., (average molecular weight: 10000; residual monomer content: not more than 50 ppm) at 50°C and a rotation speed of 1400 rpm for 5 min. The thus obtained mixture was mixed with 30% by weight of water using a high-speed rolling type Omni mixer "OM-30SA Model" manufactured by Chiyoda Giken Kogyo Co., Ltd. The resultant mixture was molded into pellets each having a size of 6 mm$\phi$ x 8 mm using a continuous pellet-producing apparatus "PRESS PELLETER FMP-180 Model" manufactured by Chiyoda Giken Kogyo Co., Ltd. The molded pellets were introduced into a fixed-bed reaction vessel, and then subjected to heat-treatment at 500°C under a nitrogen atmosphere for 2 hours and further to reduction treatment at 450°C under a hydrogen atmosphere for 2 hours, thereby producing a molded product (6 mm$\phi$ x 8 mm) of $\alpha$-Fe-carbon composite particles containing 99.47% by weight of $\alpha$-Fe and 0.53% by weight of carbon and having a BET specific surface area of 10 m$^2$/g.

Next, 30 g of the molded product of $\alpha$-Fe-carbon composite particles was pulverized into particles in a mortar, and added into a 3-L beaker filled with 1.0 L of ion-exchanged water to prepare a water suspension thereof. Into the water suspension was added 47 mL of an aqueous solution containing 0.5 mmol/L of ruthenium colloid ("TCU-111" produced by Toda Kogyo Co., Ltd.) under stirring, and the resultant mixture was further mixed under stirring for 30 min, and then filtered and washed with water. The obtained filter cake was dried at 30°C, thereby obtaining composite particles. As a result, it was confirmed that the obtained composite particles were $\alpha$-Fe-carbon-ruthenium composite particles which were composed of 99.46% by weight of $\alpha$-Fe, 0.53% by weight of carbon and 0.008% by weight of ruthenium, and had a BET specific surface area of 10 m$^2$/g and an average particle diameter of $\alpha$-Fe of 0.20 $\mu$m (iron composite particles 8).

Comparative Example 2:

<$\alpha$-Fe-carbon composite particles>

The molded product (6 mm$\phi$ x 8 mm) of $\alpha$-Fe-carbon composite particles containing 99.47% by weight of $\alpha$-Fe and 0.53% by weight of carbon and having a BET specific surface area of 10 m$^2$/g which were obtained in Example 1, was pulverized into particles in a mortar, thereby obtaining $\alpha$-Fe-carbon composite particles (iron composite particles 8).
Various properties of the thus obtained composite particles are shown in Table 2.

<Purification treatment of dummy contaminated soil or contaminated ground water or waste water>

Use Example 1:

<Results of purification treatment of chlorobenzene in soil>

When a soil sample was treated with the iron composite particles 1 according to the above evaluation method, it was confirmed that a residual percentage of chlorobenzene contained in the soil was 2.1% after 100 hours, and the reaction product obtained after the treatment was composed of benzene and cyclohexane.

Use Examples 2 to 6, Reference Use Examples 1 and 2, and Comparative Use Examples 1 and 2:

The same procedure as defined in Use Example 1 was conducted except that kinds of iron composite particles as well as kinds of materials to be reacted and purified were changed variously, thereby treating the dummy contaminated soil or contaminated ground water or waste water.
The evaluation results are shown in Table 3.

Example 5:

<$\alpha$-Fe-Fe$_3$O$_4$-aluminum-ruthenium composite particles and purifying agent>

A reaction vessel which was maintained under a non-oxidative atmosphere by flowing N$_2$ gas at a rate of 3.4 cm/s therethrough, was charged with 704 L of a 1.16 mol/L Na$_2$CO$_3$ aqueous solution, and then with 296 L of an aqueous ferrous sulfate solution containing 1.35 mol/L of Fe$^{2+}$ (amount of Na$_2$CO$_3$: 2.0 equivalents per equivalent of Fe), and the contents in the reaction vessel were reacted with each other at 47°C to produce FeCO$_3$.

The aqueous solution containing the thus obtained FeCO$_3$ was successively held at 47°C for 70 min while blowing N$_2$ gas thereinto at a rate of 3.4 cm/s. Thereafter, air was passed through the FeCO$_3$-containing aqueous solution at 47°C and a flow rate of 2.8 cm/s for 5.0 hours, thereby producing goethite particles 1. Meanwhile, it was confirmed that the pH value of the aqueous solution during the air passage was maintained at 8.5 to 9.5.

The water suspension containing the thus obtained goethite particles 1 was mixed with 20 L of an aqueous Al sulfate solution containing 0.3 mol/L of Al$^{3+}$, and the resultant mixture was sufficiently stirred and then washed with water using a filter press, thereby obtaining a press cake. The obtained press cake was extrusion-molded and granulated using a compression-molding machine equipped with a mold plate having an orifice diameter of 4 mm, and then dried at 120°C, thereby obtaining a granulated product of the goethite particles 1.

It was confirmed that the goethite particles constituting the obtained granulated product were spindle-shaped particles having an average major axis diameter of 0.30 $\mu$m, an aspect ratio (major axis diameter/minor axis diameter) of 12.5:1, a BET specific surface area of 85 m$^2$/g, an Al content of 0.40% by weight and an S content of 400 ppm.

The granulated product of the goethite particles 1 was heated at 330°C to transform the goethite particles into hematite particles, and then dry-pulverized. Thereafter, the obtained hematite particles were deaggregated in water, and mixed with 70% sulfuric acid in an amount of 10 mL/kg under stirring. Then, the resultant mixture was dehydrated to obtain a press cake. The thus obtained press cake was extrusion-molded and granulated using a compression-molding machine equipped with a mold plate having an orifice diameter of 3 mm, and then dried at 120°C, thereby obtaining a granulated product of the hematite particles.

It was confirmed that the hematite particles constituting the obtained granulated product were spindle-shaped particles having an average major axis diameter of 0.24 $\mu$m, an aspect ratio (major axis diameter/minor axis diameter) of 10.7:1, and an S content of 3300 ppm.

100 g of the granulated product of the hematite particles were introduced into a fixed bed type reducing furnace, and reduced at 450°C for 180 min while passing H$_2$ gas therethrough until the hematite particles were completely transformed into $\alpha$-Fe. Then, after replacing the H$_2$ gas with N$_2$ gas and cooling the obtained iron particles to room temperature, an oxygen partial pressure in the reducing furnace was gradually increased until finally reaching the same oxygen content as that of air, thereby forming a stable oxidation film on the surface of the particles. Next, 300 ml of ion-exchanged water was directly introduced into the reducing furnace, and the contents of the reducing furnace were directly taken out therefrom in the form of a water suspension containing the iron particles.

The water suspension was transferred into a stainless steel beaker equipped with a baffle, and stirred at a rotating speed of 3600 rpm for 30 min using a medium-speed rotation type stirrer "0.2 kW-powered T.K. Homodisper 2.5 Model" with 40 mm$\phi$ edged turbine blades (manufactured by Tokushu Kika Kogyo Co., Ltd.) which was inserted into the beaker.

Then, the water suspension was dispersed at a rotating speed of 4000 rpm using a continuous shear type dispersing apparatus "0.55 kW-powered T.K. Homomic Line Mill PL-SL Model" manufactured by Tokushu Kika Kogyo Co., Ltd.

Thereafter, the water suspension was dispersed at a rotating speed of 500 rpm using a media type dispersing apparatus "1.5 kW-powered four-cylinder sand grinder 4-TSG-(1/8G) Model" manufactured by Tokushu Kika Kogyo Co., Ltd., which was filled with 0.25 L of 2 mm$\phi$ glass beads, thereby obtaining 300 mL of a water suspension having a solid content of 30% by weight.

The thus obtained water suspension was transferred into a stainless steel beaker equipped with a baffle, and mixed with 710 mL of a 1.25 mmol/L ruthenium colloid aqueous solution "TCU-611" produced by Toda Kogyo Co., Ltd., (average particle diameter: 5 nm) under stirring with agitation blades, and the contents of the beaker were further mixed under stirring for 30 min, and then washed with water by decantation method until a conductivity of a supernatant thereof reached not more than 100 $\mu$S/cm, thereby producing 300 mL of a purifying agent having a specific gravity of 1.25 and a solid content of 30% by weight (purifying agent 1).

As a result of observing by a scanning electron microscope (magnification: x 30,000), it was confirmed that the primary particles of the iron composite particles contained in the thus obtained purifying agent are rice grain-like particles having an average major axis diameter of 0.09 $\mu$m and an aspect ratio of 1.4:1.

Next, the thus obtained purifying agent was filtered, and then dried in air at 40°C for 3 hours, thereby producing $\alpha$-Fe-Fe$_3$O$_4$-aluminum-ruthenium composite particles (iron composite particles 9). As a result, it was confirmed that the thus obtained iron composite particles contained $\alpha$-Fe as a main component, and had a saturation magnetization value of 132 $Am^2/kg$ (132 emu/g), a BET specific surface area of 27 $m^2/g$, a crystallite size of 295 Å, an Fe content of 82.90% by weight, an Al content of 0.40% by weight, an S content of 4000 ppm and a ruthenium content of 0.10% by weight. Also, as a result of the X-ray diffraction analysis of the iron composite particles, it was confirmed that the ratio of a diffraction intensity $D_{110}$ of $\alpha$-Fe to a sum of a diffraction intensity $D_{311}$ of $Fe_3O_4$ and the diffraction intensity $D_{110}$, i.e., ($D_{110}/(D_{311} + D_{110})$) was 0.84.

Example 6:

<$\alpha$-Fe-$Fe_3O_4$-aluminum-palladium composite particles and purifying agent>

12.8 L of an aqueous ferrous sulfate solution containing $Fe^{2+}$ in an amount of 1.50 mol/L was mixed with 30.2 L of a 0.44-N NaOH aqueous solution (corresponding to 0.35 equivalent based on $Fe^{2+}$ contained in the aqueous ferrous sulfate solution), and the obtained mixed solution was reacted at a pH of 6.7 and a temperature of 38°C, thereby producing an aqueous ferrous sulfate solution containing $Fe(OH)_2$. Then, air was passed through the aqueous ferrous sulfate solution containing $Fe(OH)_2$ at a temperature of 40°C and a flow rate of 130 L/min for 3.0 hours, thereby producing goethite core particles.

The aqueous ferrous sulfate solution containing the goethite core particles (in an amount corresponding to 35 mol% based on finally produced goethite particles) was mixed with 7.0 L of a 5.4N $Na_2CO_3$ aqueous solution (corresponding to 1.5 equivalents based on residual $Fe^{2+}$ contained in the aqueous ferrous sulfate solution). Then, air was passed through the mixed solution at a pH of 9.4, a temperature of 42°C and a flow rate of 130 L/min for 4 hours, thereby producing goethite particles. The suspension containing the thus obtained goethite particles was mixed with 0.96 L of an aqueous A1 sulfate solution containing $Al^{3+}$ in an amount of 0.3 mol/L, fully stirred and then washed with water using a filter press, thereby obtaining a press cake. The obtained press cake was extrusion-molded and granulated using a compression-molding machine equipped with a mold plate having an orifice diameter of 4 mm, and then dried at 120°C, thereby obtaining a granulated product of the goethite particles 2.

It was confirmed that the goethite particles constituting the above granulated product were acicular particles having an average major axis diameter of 0.33 $\mu$m, an aspect ratio (major axis diameter/minor axis diameter) of 25.0: 1, a BET specific surface area of 70 $m^2/g$, an Al content of 0.42% by weight and an S content of 4000 ppm.

The granulated product of the goethite particles were heated at 330°C to transform the goethite particles into hematite particles, and then dry-pulverized. Thereafter, the obtained hematite particles were dehydrated to obtain a press cake. The obtained press cake was extrusion-molded and granulated using a compression-molding machine equipped with a mold plate having an orifice diameter of 3 mm, and then dried at 120°C, thereby obtaining a granulated product of the hematite particles.

It was confirmed that the hematite particles constituting the obtained granulated product were acicular particles having an average major axis diameter of 0.25 $\mu$m, an aspect ratio (major axis diameter/minor axis diameter) of 21.4: 1, and an S content of 4500 ppm.

100 g of the granulated product of the hematite particles were introduced into a fixed bed type reducing furnace, and reduced at 450°C for 180 min while passing $H_2$ gas therethrough until the hematite particles were completely transformed into $\alpha$-Fe. Then, after replacing the $H_2$ gas with $N_2$ gas and cooling the obtained iron particles to room temperature, 300 ml of ion-exchanged water was directly introduced into the reducing furnace, and the contents of the reducing furnace were directly taken out therefrom in the form of a water suspension containing the iron particles in an amount of about 20% by weight.

The water suspension was transferred into a stainless steel beaker equipped with a baffle, and stirred at a rotating speed of 3600 rpm for 30 min using a medium-speed rotation type stirrer "0.2 kW-powered T.K. Homodisper 2.5 Model" with 40 mm$\phi$ edged turbine blades (manufactured by Tokushu Kika Kogyo Co., Ltd.) which was inserted into the beaker.

Then, the water suspension was dispersed at a rotating speed of 4000 rpm using a continuous shear type dispersing apparatus "0.55 kW-powered T.K. Homomic Line Mill PL-SL Model" manufactured by Tokushu Kika Kogyo Co., Ltd.

Thereafter, the water suspension was dispersed at a rotating speed of 500 rpm using a media type dispersing apparatus "1.5 kW-powered four-cylinder sand grinder 4-TSG-(1/8G) Model" manufactured by Tokushu Kika Kogyo Co., Ltd. which was filled with 0.25 L of 2 mm$\phi$ glass beads, thereby obtaining 300 mL of a water suspension having a solid content of 30% by weight.

The thus obtained water suspension was transferred into a stainless steel beaker equipped with a baffle, and mixed with 340 mL of a 5.0 mmol/L palladium nitrate aqueous solution under stirring with agitation blades, and the contents of the beaker were further mixed under stirring for 30 min, and then washed with water by decantation method until a conductivity of a supernatant thereof reached not more than 100 $\mu$S/cm. The resultant water suspension was further mixed with 15 g (calculated as solid) of an aqueous polymaleic acid solution "POLYSTAR OM" produced by Nippon Yushi Co., Ltd., under stirring with agitation blades, thereby producing 300 mL of a purifying agent having a specific gravity of 1.25 and a solid content of 30% by weight (purifying agent 2).

As a result of observing by a scanning electron microscope (magnification: x 30,000), it was confirmed that the primary particles of the iron composite particles contained in the thus obtained purifying agent were rice grain-like particles having an average major axis diameter of 0.11 $\mu$m and an aspect ratio of 1.4:1.

Next, a part of the thus obtained purifying agent was sampled, filtered, washed with water, and then dried in air at 40°C for 3 hours, thereby producing $\alpha$-Fe-$Fe_3O_4$-aluminum-palladium composite particles (iron composite particles 10).

As a result, it was confirmed that the thus obtained iron composite particles contained $\alpha$-Fe as a main component, and had a saturation magnetization value of 140 $Am^2/kg$ (140 emu/g), a BET specific surface area of 20 $m^2/g$, a crystallite size of 298 Å, an Fe content of 85.92% by weight, an Al content of 0.68% by weight, an S content of 5500 ppm and a palladium content of 0.20% by weight. Also, as a result of the X-ray diffraction analysis of the iron composite particles, it was confirmed that both $\alpha$-Fe and $Fe_3O_4$ were present in the iron composite particles, and the ratio of a diffraction intensity $D_{110}$ of $\alpha$-Fe to a sum of a diffraction intensity $D_{311}$ of $Fe_3O_4$ and the diffraction intensity $D_{110}$, i/e., $(D_{110}/(D_{311} + D_{110}))$ thereof was 0.88.

Examples 7 and 8, Reference Examples 3 and 4, and Comparative Example 3:

<Iron composite particles and purifying agent>

The same procedure as defined in Example 5 was conducted except that kinds of goethite particles, heat-dehydrating temperature, addition or non-addition of sulfuric acid to the suspension containing hematite particles as well as amount of the sulfuric acid, if added, heat-reduction temperature, solid content of purifying agent, and kinds and amounts of noble metals added, were changed variously, thereby obtaining iron composite particles and a purifying agent.

Meanwhile, as to the goethite particles 3, the same procedure as defined in Example 5 was conducted except that the amount of the aqueous Al sulfate solution added was changed variously, thereby obtaining a granulated product of the goethite particles.

Example 9:

<$\alpha$-Fe-$Fe_3O_4$-aluminum-ruthenium composite particles and purifying agent>

12.8 L of an aqueous ferrous sulfate solution containing $Fe^{2+}$ in an amount of 1.50 mol/L was mixed with 30.2 L of a 0.44-N NaOH aqueous solution (corresponding to 0.35 equivalent based on $Fe^{2+}$ contained in the aqueous ferrous sulfate solution), and the obtained mixed solution was reacted at a pH of 6.7 and a temperature of 38°C, thereby producing an aqueous ferrous sulfate solution containing $Fe(OH)_2$. Then, air was passed through the aqueous ferrous sulfate solution containing $Fe(OH)_2$ at a temperature of 40°C and a flow rate of 130 L/min for 3.0 hours, thereby producing goethite core particles.

The aqueous ferrous sulfate solution containing the goethite core particles (in an amount corresponding to 35 mol% based on finally produced goethite particles) was mixed with 7.0 L of a 5.4N $Na_2CO_3$ aqueous solution (corresponding to 1.5 equivalents based on residual $Fe^{2+}$ contained in the aqueous ferrous sulfate solution). Then, air was passed through the mixed solution at a pH of 9.4, a temperature of 42°C and a flow rate of 130 L/min for 4 hours, thereby producing goethite particles. The suspension containing the thus obtained goethite particles was mixed with 0.96 L of an aqueous Al sulfate solution containing $Al^{3+}$ in an amount of 0.3 mol/L, and fully stirred. Further, the suspension was mixed with 1.41 L of an aqueous Ru chloride solution containing $Ru^{2+}$ in an amount of 0.05 mol/L, fully stirred and then washed with water using a filter press, thereby obtaining a press cake. The obtained press cake was extrusion-molded and granulated using a compression-molding machine equipped with a mold plate having an orifice diameter of 4 mm, and then dried at 120°C, thereby obtaining a granulated product of the goethite particles 4.

It was confirmed that the goethite particles constituting the above granulated product were acicular particles having an average major axis diameter of 0.33 $\mu$m, an aspect ratio (major axis diameter/minor axis diameter) of 25.0: 1, a BET specific surface area of 70 $m^2/g$, an Al content of 0.40% by weight, a Ru content of 0.35% by weight and an S content of 3500 ppm.

The granulated product of the goethite particles was heated at 330°C, thereby obtaining a granulated product of hematite particles.

It was confirmed that the hematite particles constituting the thus obtained granulated product were acicular particles having an average major axis diameter of 0.25 $\mu$m, an aspect ratio (major axis diameter/minor axis diameter) of 22.0:1 and an S content of 4000 ppm.

100 g of the granulated product of the hematite particles was introduced into a fixed bed type reducing furnace, and reduced at 450°C for 180 min while passing $H_2$ gas therethrough until the hematite particles were completely transformed into $\alpha$-Fe. Then, after replacing the $H_2$ gas with $N_2$ gas, the obtained iron particles were cooled to room temperature, and then after further replacing an inside of the furnace gas with $N_2$ gas, the iron particles were cooled to 70°C. Next, an oxygen partial pressure in the reducing furnace was gradually increased until finally reaching the same oxygen content as that of air, to form a stable oxidation film on the surface of the particles, thereby obtaining $\alpha$-Fe-$Fe_3O_4$-aluminum-ruthenium composite particles (iron composite particles 11).

The thus obtained iron particles 11 were charged into 300 ml of ion-exchanged water to prepare a water suspension containing about 20% by weight of the iron composite particles. Thereafter, the water suspension was transferred into a stainless steel beaker equipped with a baffle, and stirred at a rotating speed of 3600 rpm for 30 min using a medium-speed rotation type stirrer "0.2 kW-powered T.K. Homodisper 2.5 Model" with 40 mm$\phi$ edged turbine blades (manufactured by Tokushu Kika Kogyo Co., Ltd.) which was inserted into the beaker.

Then, the water suspension was dispersed at a rotating speed of 4000 rpm using a continuous shear type dispersing apparatus "0.55 kW-powered T.K. Homomic Line Mill PL-SL Model" manufactured by Tokushu Kika Kogyo Co., Ltd.

Thereafter, the water suspension was dispersed at a rotating speed of 500 rpm using a media type dispersing apparatus "1.5 kW-powered four-cylinder sand grinder 4TSG-(1/8G) Model" manufactured by Tokushu Kika Kogyo Co., Ltd., which was filled with 0.25 L of 2 mm$\phi$ glass beads. Further, the obtained water suspension was transferred into a stainless steel beaker equipped with a baffle, and mixed with 10. 8 g (calculated as solid) of a polymaleic acid aqueous solution "POLYSTAR OM" produced by Nippon Yushi Co., Ltd., under stirring with agitation blades, thereby producing 300 mL of a purifying agent having a specific gravity of 1.20 and a solid content of 20% by weight (purifying agent 3).

As a result of observing the iron composite particles contained in the thus obtained purifying agent by a scanning electron microscope (magnification: x 30,000), it was confirmed that the primary particles contained therein were rice grain-shaped particles having an average major axis diameter of 0.10 $\mu$m and an aspect ratio of 1.4:1.

Further, it was confirmed that the obtained iron composite particles contained $\alpha$-Fe as a main component, and had a saturation magnetization value of 152 $Am^2/kg$ (152 emu/g), a BET specific surface area of 27 $m^2/g$, a crystallite size of 262 Å, an Fe content of 87.70% by weight and an S content of 4700 ppm. Also, as a result of the X-ray diffraction analysis, it was confirmed that both $\alpha$-Fe and $Fe_3O_4$ were present in the iron composite particles, and the ratio of a diffraction intensity $D_{110}$ of $\alpha$-Fe to a sum of a diffraction intensity $D_{311}$ of $Fe_3O_4$ and the diffraction intensity $D_{110}$ ($D_{110}/(D_{311} + D_{110})$) thereof was 0.87.

Various properties of the obtained goethite particles are shown in Table 4, essential production conditions are shown in Table 5, and various properties of the obtained iron composite particles are shown in Table 6.

<Purification treatment of dummy contaminated soil or contaminated ground water or waste water>

Use Example 7:

<Results of purification treatment of chlorobenzene in soil>

When a soil sample was treated with the iron composite particles obtained in Example 5 according to the above evaluation method, it was confirmed that a residual percentage of chlorobenzene contained in the soil was 4.5% after 100 hours, and the reaction product obtained after the treatment was composed of benzene and cyclohexane.

Use Examples 8 to 15, Reference Use Examples 3 to 5, and Comparative Use Example 3:

The same procedure as defined in Use Example 7 was conducted except that kinds of iron composite particles or purifying agent as well as kinds of materials to be reacted and purified were changed variously, thereby treating the dummy contaminated soil or contaminated ground water or waste water.

The evaluation results are shown in Table 7.

Meanwhile, in Tables, the iron composite particles 12 and the purifying agent 4 are respectively the iron composite particles and purifying agent obtained in Example 7; the iron composite particles 13 and the purifying agent 5 are respectively the iron composite particles and purifying agent obtained in Example 8; the iron composite particles 14 and the purifying agent 6 are respectively the iron composite particles and purifying agent obtained in Reference Example 3; the iron composite particles 15 are the iron composite particles obtained in Reference Example 4; and the iron composite particles 16 are the iron composite particles obtained in Comparative Example 3.

Table 1

| Isomers | Concentration of rax solution (ng/mL) | Equivalent coefficient of toxicity, etc. WHO-TEP (1998) | Toxicity equivalent [ng-TEQ/mL] |
|---|---|---|---|
| 1,3,6,8-TeCDD | 1000 | - | 0 |
| 1,3,7,9-TeCDD | 1000 | - | 0 |
| 2,3,7,8-TeCDD | 1000 | 1 | 1000 |
| 1,2,3,7,8-PeCDD | 1000 | 1 | 1000 |
| 1,2,3,4,7,8-HxCDD | 2000 | 0.1 | 200 |
| 1,2,3,6,7,8-HxCDD | 2000 | 0.1 | 200 |
| 1,2,3,7,8,9-HxCDD | 2000 | 0.1 | 200 |
| 1,2,3,4,6,7,8-HpCDD | 2000 | 0.01 | 20 |
| OCDD | 4000 | 0.0001 | 0.4 |
| 1,2,7,8-TeCDF | 1000 | - | 0 |
| 2,3,4,7,8-TeCDF | 1000 | 0.1 | 100 |
| 1,2,3,7,8-PeCDF | 1000 | 0.05 | 50 |
| 2,3,4,7,8-PeCDF | 1000 | 0.5 | 500 |
| 1,2,3,4,7,8-HxCDF | 2000 | 0.1 | 200 |
| 1,2,3,6,7,8-HxCDF | 2000 | 0.1 | 200 |
| 1,2,3,7,8,9-HxCDF | 2000 | 0.1 | 200 |
| 2,3,4,6,7,8-HxCDF | 2000 | 0.1 | 200 |
| 1,2,3,4,7,8,9-HpCDF | 2000 | 0.01 | 20 |
| OCDF | 4000 | 0.0001 | 0.4 |
| Total PCDDs/PCDFs (TEQ) | - | - | 4111 |

Table 2

| Examples, Reference Examples and Comparative Examples | Properties of iron composite particles for purifying organohalogen compounds | | | |
|---|---|---|---|---|
| | Composition | | | |
| | Fe content (wt %) | Carbon (wt %) | Noble metal | |
| | | | Kind | Content (wt %) |
| Example 1 | 99.37 | 0.53 | Ru | 0.10 |
| Example 2 | 95.60 | 4.20 | Ru | 0.20 |
| Example 3 | 97.50 | 1.10 | Ru | 1.40 |
| Example 4 | 95.50 | 4.30 | Pd | 0.20 |
| Reference Example 1 | 89.30 | 10.50 | Pd | 0.20 |
| Reference Example 2 | 99.82 | 0.08 | Ru | 0.10 |
| Comparative Example 1 | 99.46 | 0.53 | Ru | 0.008 |
| Comparative Example 2 | 99.50 | 0.53 | -- | 0 |

Table 2 (continued)

| Examples, Reference Examples and Comparative Examples | Properties of iron composite particles for purifying organohalogen compounds | |
|---|---|---|
| | BET specific surface area (m$^2$/g) | Particle diameter of metallic iron ($\mu$m) |
| Example 1 | 10 | 0.20 |
| Example 2 | 41 | 0.18 |
| Example 3 | 15 | 0.22 |
| Example 4 | 35 | 0.25 |
| Reference Example 1 | 109 | 0.20 |
| Reference Example 2 | 3.2 | 0.28 |
| Comparative Example 1 | 10 | 0.20 |
| Comparative Example 2 | 10 | 0.20 |

Table 3

| Use Ex., Reference Use Ex. and Comparative Use Ex. | Kinds of iron composite particles for purifying organohalogen compounds | Materials to be reacted and purified | Residual percentage [%] |
|---|---|---|---|
| Use Example 1 | Particles obtained in Example 1 | Chlorobenzene in dummy soil | 3.1 |
| Use Example 1 | Particles obtained in Example 1 | Chlorobenzene in dummy soil | 3.1 |
| Use Example 3 | Particles obtained in Example 1 | Dioxins in dummy ground water or waste water | 20 |
| Use Example 4 | Particles obtained in Example 2 | Chlorobenzene in dummy soil | 0.5 |
| Use Example 5 | Particles obtained in Example 3 | Dioxins in dummy ground water or waste water | 1.5 |
| Use Example 6 | Particles obtained in Example 4 | Chlorobenzene in dummy ground water or waste water | 0.5 |
| Reference Use Example 1 | Particles obtained in Reference Example 1 | Chlorobenzene in dummy ground water or waste water | 15 |
| Reference Use Example 2 | Particles obtained in Reference Example 2 | Chlorobenzene in dummy soil | 54 |
| Comparative Use Example 1 | Particles obtained in Comparative Example 1 | Dioxins in dummy ground water or waste water | 98 |
| Comparative Use Example 2 | Particles obtained in Comparative Example 2 | Chlorobenzene in dummy ground water or waste water | 99 |

Table 4

| Goethite particles | Properties of goethite particles | | |
|---|---|---|---|
| | Shape | Average major axis diameter ($\mu$m) | Aspect ratio (-) |
| Goethite particles 1 | Spindle-shaped | 0.30 | 12.5:1 |
| Goethite particles 2 | Acicular | 0.33 | 25.0:1 |
| Goethite particles 3 | Spindle-shaped | 0.30 | 12.5:1 |
| Goethite particles 4 | Acicular | 0.33 | 25.0:1 |

Table 4 (continued)

| Goethite particles | Properties of goethite particles | | | | |
|---|---|---|---|---|---|
| | BET specific surface area ($m^2$/g) | Al content (wt%) | S content (ppm) | Noble metal | |
| | | | | Kind | Content (wt %) |
| Goethite particles 1 | 85 | 0.13 | 400 | - | - |
| Goethite particles 2 | 70 | 0.42 | 4000 | - | - |
| Goethite particles 3 | 85 | 1.50 | 400 | - | - |
| Goethite particles 4 | 70 | 0.40 | 3500 | Ruthenium chloride | 0.36 |

## Table 5

| Examples, Reference Examples and Comparative Examples | Reaction conditions for production of iron composite particles | | |
|---|---|---|---|
| | Kind of goethite particles used | Heat-dehydrating temperature (°C) | Average particle diameter of hematite particles ($\mu$m) |
| Example 5 | Goethite particles 1 | 300 | 0.24 |
| Example 6 | Goethite particles 2 | 330 | 0.25 |
| Example 7 | Goethite particles 2 | 330 | 0.25 |
| Example 8 | Goethite particles 2 | 260 | 0.24 |
| Example 9 | Goethite particles 4 | 330 | 0.25 |
| Reference Example 3 | Goethite particles 3 | 300 | 0.21 |
| Reference Example 4 | Goethite particles 1 | 300 | 0.24 |
| Comparative Example 3 | Goethite particles 1 | 300 | 0.24 |

Table 5 (continued)

| Examples, Reference Examples and Comparative Examples | Reaction conditions for production of iron composite particles | | |
|---|---|---|---|
| | Amount of sulfuric acid added (mL/kg) | S content (ppm) | Reducing temperature (°C) |
| Example 5 | 10 | 3300 | 450 |
| Example 6 | - | 4500 | 450 |
| Example 7 | - | 4500 | 400 |
| Example 8 | - | 4500 | 360 |
| Example 9 | - | 4000 | 450 |
| Reference Example 3 | 10 | 3300 | 400 |
| Reference Example 4 | 10 | 3300 | 300 |
| Comparative Example 3 | 10 | 3300 | 400 |

Table 5 (continued)

| Examples, Reference Examples and Comparative Examples | Treating conditions of noble metal | | |
|---|---|---|---|
| | Kind | Treating concentration (mmol/L) | Treating amount per 100 g of iron composite particles (mL) |
| Example 5 | Ruthenium colloid | 1.25 | 790 |
| Example 6 | Palladium nitrate | 5.0 | 380 |
| Example 7 | Rhodium colloid | 2.5 | 980 |
| Example 8 | Ruthenium chloride | 10 | 990 |
| Example 9 | – | – | – |
| Reference Example 3 | Palladium nitrate | 5.0 | 380 |
| Reference Example 4 | Ruthenium colloid | 1.25 | 790 |
| Comparative Example 3 | None | – | – |

## Table 6

| Examples, Reference Examples and Comparative Examples | Properties of iron composite particles | | |
|---|---|---|---|
| | Average particle diameter ($\mu$m) | BET specific surface area ($m^2/g$) | Fe content (wt %) |
| Example 5 | 0.09 | 27 | 82.90 |
| Example 6 | 0.11 | 20 | 85.92 |
| Example 7 | 0.11 | 20 | 85.92 |
| Example 8 | 0.09 | 33 | 76.01 |
| Example 9 | 0.10 | 27 | 87.70 |
| Reference Example 3 | 0.05 | 46 | 71.13 |
| Reference Example 4 | 0.24 | 52 | 66.94 |
| Comparative Example 3 | 0.09 | 27 | 83.03 |

## Table 6 (continued)

| Examples, Reference Examples and Comparative Examples | Properties of iron composite particles | | |
|---|---|---|---|
| | Al content (wt %) | S content (ppm) | Crystallite size $D_{110}$ (Å) |
| Example 5 | 0.40 | 4000 | 295 |
| Example 6 | 0.68 | 5500 | 298 |
| Example 7 | 0.68 | 5500 | 298 |
| Example 8 | 0.68 | 5500 | 200 |
| Example 9 | 0.63 | 4700 | 262 |
| Reference Example 3 | 2.40 | 4000 | 190 |
| Reference Example 4 | 0.05 | 4000 | - |
| Comparative Example 3 | 0.40 | 4000 | 295 |

Table 6 (continued)

| Examples, Reference Examples and Comparative Examples | Properties of iron composite particles | | |
|---|---|---|---|
| | Saturation magnetization σs | | Crystal phase |
| | (Am$^2$/kg) | (emu/g) | |
| Example 5 | 132 | 132 | Mixed phase of α-Fe and Fe$_3$O$_4$ |
| Example 6 | 140 | 140 | Mixed phase of α-Fe and Fe$_3$O$_4$ |
| Example 7 | 139 | 139 | Mixed phase of α-Fe and Fe$_3$O$_4$ |
| Example 8 | 92 | 92 | Mixed phase of α-Fe and Fe$_3$O$_4$ |
| Example 9 | 152 | 152 | Mixed phase of α-Fe and Fe$_3$O$_4$ |
| Reference Example 3 | 81 | 81 | Mixed phase of α-Fe and Fe$_3$O$_4$ |
| Reference Example 4 | 76 | 76 | Single phase of Fe$_3$O$_4$ |
| Comparative Example 3 | 135 | 135 | Mixed phase of α-Fe and Fe$_3$O$_4$ |

## Table 6 (continued)

| Examples, Reference Examples and Comparative Examples | Properties of iron composite particles | |
|---|---|---|
| | X-ray diffraction intensity ratio $(D_{110}/(D_{110}+D_{311}))$ | Kind and content (wt %) of noble metal |
| Example 5 | 0.84 | Ru (1.00) |
| Example 6 | 0.88 | Pd (0.20) |
| Example 7 | 0.88 | Rh (0.50) |
| Example 8 | 0.35 | Ru (1.00) |
| Example 9 | 0.87 | Ru (0.50) |
| Reference Example 3 | 0.14 | Pd (0.20) |
| Reference Example 4 | – | Ru (0.10) |
| Comparative Example 3 | 0.84 | None |

Table 7

| Use Ex., Reference Use Ex. and Comparative Use Ex. | Kinds of iron composite particles or purifying agent | Content of iron composite particles in purifying agent (wt %) |
|---|---|---|
| Use Example 7 | Iron composite particles 1 | - |
| Use Example 8 | Purifying agent 2 | 30 |
| Use Example 9 | Iron composite particles 12 | - |
| Use Example 10 | Purifying agent 5 | 20 |
| Use Example 11 | Purifying agent 2 | 30 |
| Use Example 12 | Iron composite particles 12 | - |
| Use Example 13 | Purifying agent 5 | 20 |
| Use Example 14 | Purifying agent 3 | 30 |
| Use Example 15 | Iron composite particles 11 | - |
| Reference Use Example 3 | Purifying agent 6 | 30 |
| Reference Use Example 4 | Iron composite particles 15 | - |
| Comparative Use Example 3 | Iron composite particles 16 | - |
| Reference Use Example 5 | Iron composite particles 6 | - |

## Table 7 (continued)

| Use Ex., Reference Use Ex. and Comparative Use Ex. | Materials to be reacted and purified | Residual percentage [%] |
|---|---|---|
| Use Example 7 | Chlorobenzene in dummy soil | 4.5 |
| Use Example 8 | Chlorobenzene in dummy ground water or waste water | 2.3 |
| Use Example 9 | Chlorobenzene in dummy ground water or waste water | 0.5 |
| Use Example 10 | Chlorobenzene in dummy soil | 0.2 |
| Use Example 11 | Dioxins in dummy soil | 52 |
| Use Example 12 | Dioxins in dummy ground water or waste water | 35 |
| Use Example 13 | Dioxins in dummy ground water or waste water | 28 |
| Use Example 14 | Chlorobenzene in dummy ground water or waste water | 1.2 |
| Use Example 15 | Dioxins in dummy ground water or waste water | 36 |
| Reference Use Example 3 | Chlorobenzene in dummy ground water or waste water | 82 |
| Reference Use Example 4 | Chlorobenzene in dummy soil | 100 |
| Comparative Use Example 3 | Chlorobenzene in dummy ground water or waste water | 100 |
| Reference Use Example 5 | Dioxins in dummy ground water or waste water | 99 |

## Claims

1. Iron composite particles for purifying soil or ground water, comprising an iron component; at least one noble metal selected from ruthenium, rhodium and palladium; and carbon or aluminum; and having a noble metal content of 0.01 to 5.00% by weight and a particle diameter of 0.05 to 0.50 $\mu$m.

2. Iron composite particles according to claim 1, which have a noble metal content of 0.05 to 3.00% by weight.

3. Iron composite particles according to claim 1 or 2, wherein said noble metal is ruthenium, rhodium or a mixture thereof.

**4.** Iron composite particles according to claim 1, comprising $\alpha$-Fe, carbon and at least one noble metal selected from ruthenium, rhodium and palladium, and having an Fe content of 85.00 to 99.89% by weight, a carbon content of 0.10 to 10.00% by weight and a noble metal content of 0.01 to 5.00% by weight.

**5.** Iron composite particles according to claim 4, which have a BET specific surface area value of 5.0 to 100 $m^2/g$.

**6.** Iron composite particles according to claim 1, comprising $\alpha$-Fe, magnetite, aluminum and at least one noble metal which is selected from ruthenium, rhodium and palladium and which is carried on composite particles comprising the $\alpha$-Fe, magnetite and aluminum; and having a ratio of a diffraction intensity $D_{110}$ of (110) plane of $\alpha$-Fe to a sum of a diffraction intensity $D_{311}$ of (311) plane of magnetite and the diffraction intensity $D_{110}$ of 0.30 to 0.95 as measured from X-ray diffraction spectrum of the iron composite particles, a noble metal content of 0.01 to 5.00% by weight and an average particle diameter of 0.05 to 0.50 $\mu$m.

**7.** Iron composite particles according to claim 6, which have an Al content of 0.10 to 1.50% by weight and an S content of 3500 to 10000 ppm.

**8.** Iron composite particles according to claim 6 or 7, which have a saturation magnetization value of 85 to 190 $Am^2/kg$, a BET specific surface area value of 5.0 to 60 $m^2/g$, a crystallite size of (110) plane of $\alpha$-Fe of 200 to 400 Å, and an Fe content of not less than 70.00% by weight.

**9.** Iron composite particles according to claim 6 or 7, comprising $\alpha$-Fe, magnetite, aluminum and at least one noble metal which is selected from ruthenium, rhodium and palladium and which is carried on composite particles comprising the $\alpha$-Fe, magnetite and aluminum; and having a ratio of a diffraction intensity $D_{110}$ of (110) plane of $\alpha$-Fe to a sum of a diffraction intensity $D_{311}$ of (311) plane of magnetite and the diffraction intensity $D_{110}$ of 0.32 to 0.95 as measured from X-ray diffraction spectrum of the iron composite particles, a noble metal content of 0.05 to 4.00% by weight, an Al content of 0.20 to 1.20% by weight, an Fe content of 70.00 to 90.00% by weight, an S content of 3800 to 10000 ppm, an average particle diameter of 0.05 to 0.30 $\mu$m, a saturation magnetization value of 90 to 190 $Am^2/kg$, a BET specific surface area value of 7.0 to 55 $m^2/g$, and a crystallite size of (110) plane of $\alpha$-Fe of 200 to 350 Å.

**10.** Iron composite particles for purifying soil or ground water, comprising $\alpha$-Fe, carbon and at least one noble metal selected from ruthenium, rhodium and palladium; and having an Fe content of 87.00 to 99.60% by weight, a carbon content of 0.30 to 8.00% by weight, a noble metal content of 0.05 to 3.00% by weight, a particle diameter of 0.03 to 0.50 $\mu$m, and a BET specific surface area value of 5.0 to 60 $m^2/g$.

**11.** A purifying agent for soil or ground water, comprising a water suspension containing the iron composite particles as defined in any one of the preceding claims as an effective ingredient.

**12.** A purifying agent according to claim 11, wherein the amount of the iron composite particles is 10 to 40 parts by weight per 100 parts by weight of the purifying agent.

**13.** A method for purifying soil or ground water, comprising treating soil or ground water contaminated with organohalogen compounds, with the iron composite particles as defined in any one of claims 1 to 10 or the purifying agent as defined in claim 11 or 12.

**14.** A method according to claim 13 comprising directly injecting the iron composite particles or the purifying agent into the soil or ground water contaminated with organohalogen compounds, at an *in-situ* position.

**15.** Use of iron composite particles as defined in any one of claims 1 to 10 or a purifying agent as defined in claim 11 or 12 for purifying soil or ground water contaminated with organohalogen compounds.

**European Patent Office**

# EUROPEAN SEARCH REPORT

Application Number

EP 05 25 1352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/039857 A1 (ZHANG WEIN-XIAN ET AL) 27 February 2003 (2003-02-27) * claims 1,2,4,9,17 * ----- | 1,10,11, 13,15 | C02F1/70 B09C1/08 B01J23/89 B01J35/00 |
| A,D | CHUAN-BAO WANG: "SYNTHESIZING NANOSCALE IRON PARTICLES FOR RAPID AND COMPLETE DECHLORINATION OF TCE AND PCBs" ENVIRONMENTAL SCIENCE AND TECHNOLOGY., vol. 31, no. 7, 1997, pages 2154-2156, XP002358793 USAMERICAN CHEMICAL SOCIETY. EASTON, PA. * the whole document * ----- | 1,10,11, 13,15 | |
| A | PATENT ABSTRACTS OF JAPAN vol. 1998, no. 08, 30 June 1998 (1998-06-30) & JP 10 071386 A (DOWA MINING CO LTD; ACCUTECH REMEDIAL SYST INC), 17 March 1998 (1998-03-17) * abstract * ----- | 1,10,11, 13,15 | |

**TECHNICAL FIELDS SEARCHED (IPC)**

C02F
B09C
B01J

The present search report has been drawn up for all claims

| Place of search | Date of completion of the search | Examiner |
|---|---|---|
| The Hague | 13 December 2005 | González Arias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 650 168 A1**

## ANNEX TO THE EUROPEAN SEARCH REPORT
## ON EUROPEAN PATENT APPLICATION NO.

EP 05 25 1352

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2005

| Patent document cited in search report | | Publication date | Patent family member(s) | | Publication date |
|---|---|---|---|---|---|
| US 2003039857 | A1 | 27-02-2003 | NONE | | |
| JP 10071386 | A | 17-03-1998 | JP | 3267873 B2 | 25-03-2002 |

EPO FORM P0459

For more details about this annex : see Official Journal of the European Patent Office, No. 12/82

39